(19) Europäisches Patentamt
European Patent Office
Office européen des brevets

(11) Publication number: **0 416 944 A1**

(12) **EUROPEAN PATENT APPLICATION**

(21) Application number: **90309831.7**

(51) Int. Cl.5: **G05D 15/00**

(22) Date of filing: **07.09.90**

(30) Priority: **08.09.89 US 404895**

(43) Date of publication of application:
**13.03.91 Bulletin 91/11**

(84) Designated Contracting States:
**DE FR GB IT**

(71) Applicant: **W.R. Grace & Co.-Conn. (a Connecticut corp.)**
**Grace Plaza 1114 Avenue of the Americas**
**New York New York 10036(US)**

(72) Inventor: **Treleven, Robert E.**
**4208 Stratford Court**
**Oneida, Wisconsin 54155(US)**

(74) Representative: **Barlow, Roy James et al**
**J.A. KEMP & CO. 14, South Square, Gray's Inn**
**London WC1R 5LX(GB)**

(54) **Infrared drying system.**

(57) An infrared drying system for monitoring the temperature, moisture content, or other physical property at particular zone positions along the width of a traveling web, and utilizing a computer control system to energize and control for finite time periods a plurality of infrared lamps for equalizing physical property and drying the web. The infrared drying system is particularly useful in the graphic arts industry, the coating industry and the paper industry, as well as any other applications requiring physical property profiling and drying of the width of a traveling web of material. The infrared drying system profiles a physical property across the width of the web by a sensor head which travels on a belt supported above the web, and inputs the information into a computer to generate signals corresponding to the measured physical property for each particular segment portion along the width of the web above or below a setpoint. A control computer generates signals corresponding to the particular segment portion of the web and the particular power to be applied to heat that segment portion of the web. A lamp control computer controls lamps in opposing lamp units, through power controller signals for energizing individual infrared heating lamps for finite time periods during each power cycle for drying the traveling web.

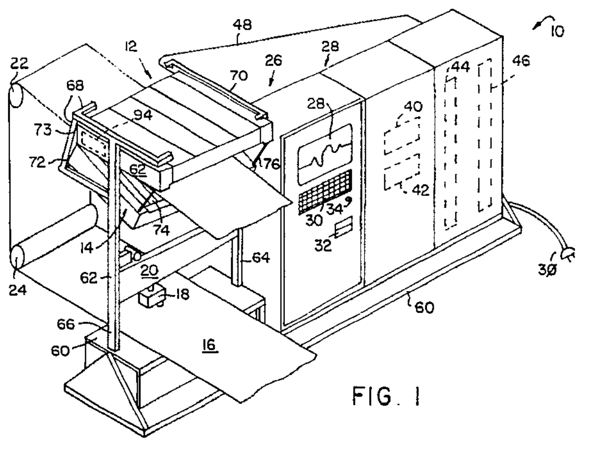

FIG. 1

EP 0 416 944 A1

# INFRARED DRYING SYSTEM

## BACKGROUND OF THE INVENTION

### 1. Field of the Invention

- The present invention pertains to an infrared drying system, and more particularly, pertains to an infrared drying system utilizing a temperature sensor, moisture sensor, or other physical property sensor connected to a computer for generating moisture content and position signals across the width of a traveling web of material with respect to a set point, and controlling infrared lamps over predetermined time intervals of a power cycle for drying the web.

### 2. Description of the Prior Art

- Prior art infrared drying systems have failed to provide for selective drying of a traveling web of material over predetermined time periods. Prior art systems have heated an entire traveling web or overlapping positions of the entire traveling web rather than selectively heating a particular portion or zone of a traveling web for a predetermined finite interval of time, particularly for time intervals of a power cycle.

The use of infrared radiation to dry webs is known. U.S. Patent No. 4,693,013 to Pabst et al. discloses an infrared dryer for drying fabric webs. The radiators can be pivoted into a "waiting position" to direct the emitted radiation away from the web so that they can remain fully energized without burning the web once the web is dried, or without burning the web if it stops moving.

U.S. Patent No. 4,015,340 to Treleven discloses ultraviolet radiating assemblies. Ultraviolet mercury quartz lamps are received within an elongated reflector having a generally elliptically shaped inside surface cross-section to focus the emitted light. The reflector includes a plurality of cooling fins. The reflector and lamps are supported by a reflector carrier, which is then slidably mounted in a lamp module. The module includes flat rectangular metal frame heat exchangers to assist in removing heat from the modules. The modules are encased in a housing having an exhaust chamber attached to a fan to pull air through the housing which also cools the components therein.

Typical prior art reflectors have poor resolution, in that they do not block the light between adjacent lamps. Thus, too large of a dissipation pattern of light results. Light from one lamp can affect areas four or five zones away. Controlling the drying of specific areas of the web by independently controlling individual lamps is extremely difficult where such a large dissipation pattern is present. The shape of the reflector is also important in avoiding reflector material degradation, including melting of the reflector.

The present invention overcomes the disadvantages of the prior art by providing an infrared drying system which sense the physical property value across the width of a traveling web and heats the traveling web with a module or unit of modules of infrared heaters to control the moisture or other physical property in the web according to an algorithm.

## SUMMARY OF THE INVENTION

The general purpose of the present invention is an infrared drying system for sensing the temperature, moisture, or other physical property across the width of a traveling web, generating amplitude content signals with respect to the sensor traveling across the width of the traveling web, processing these signals, and generating signals to control power level signals for specific portions of the traveling web for predetermined time intervals, and controlling a plurality of infrared lamps on opposing sides of the web through power controllers to dry the traveling web.

According to one embodiment of the present invention, there is provided an infrared drying system including a traveling web of material which travels past a moisture monitor on an endless belt reciprocating across the width of a web and monitoring moisture, especially above a setpoint. There can be one or more moisture sensors on the belt for monitoring the moisture. This information is received by a monitoring computer to generate moisture content signals with respect to the signal positions of the moisture sensor over a particular portion of the traveling web. These signals are received by a control computer which generates power level signals for infrared lamps for particular positions, portions or zones for the traveling web of material. These signals are received by the lamp control computer which controls individual power modules for switching power to the infrared lamps. The infrared lamps can be individual reflectors, modules such as three reflectors, or units such as four modules with each module having three reflectors. Generally, the moisture sensors and the infrared lamps are in close proximity with respect to each other about the traveling web.

One significant aspect and feature of the present invention is an infrared drying system which utilizes infrared heating modules which are switched over particular time periods during each cycle of three-phase power.

Another significant aspect and feature of the present invention are infrared lamps which are switched by a lamp computer through individual power modules which provides cost efficient switching of the infrared lamps.

A further significant aspect and feature of the present invention is an infrared drying system which provides for controlling temperature, moisture, or other physical property across the width of a traveling web. The system can either be a closed loop feed back system or an open loop feed back system for the control of the physical property above or below a predetermined setpoint.

Other significant aspects and features of the present invention include infrared lamp power levels which are controlled by computers located in an electrical cabinet conveniently positioned to the sensor cabinet. The computer controls each lamp with 16 power levels by way of example, for maximum web profile control. The power control modules are cost efficient. Any lamps and fuses can be tested continuously by the control computer to alert an operator if a failure occurs. Thermal switches and pressure switches can protect the heating unit from air flow failure. Safety interlocks can turn off power to the lamps when the traveling web is not moving. Each electrical control cabinet can control up to 48 or more infrared lamps and the module design provides for expansion by way of example.

Having thus described the embodiments of the preset invention, it is a principal object hereof to provide an infrared drying system for energizing selected infrared lamps positioned across the width of a traveling web of material over predetermined time periods of power cycles for drying the traveling web.

One object of the present invention is computer controlled infrared lamps which produce uniform drying across the web. A complete closed loop or open loop drying system is provided by the teachings of this disclosure. The operator console is user friendly. Self-testing is run continuously on the profiling system. Safety interlocks protect operators and the profiling system. The infrared heating units can be installed either stationary or retractable from the web. Retraction can be either a planar or clamshell configuration, operated by electric motors or pneumatic air cylinders as illustrated. Solvent is collected in the dryer, not in the infrared heating unit. Module design makes maintenance very easy. Lamps can be replaced either as a module or a single lamp.

Another object of the present invention is a unique infrared lamp reflector which provides the highest resolution of infrared lighting. This prevents hot spots which could damage the finish of the coating. The reflector provides web support and prevents mechanical interference. Infrared heating units and electrical cabinets for the computers and power controllers are modular to enable building a system that fits individual customer requirements. Web width, space limitations and special applications can be accommodated. The infrared lamp section can be used as a dryer booster without the profile monitor and independently computer controlled.

A further object of the present invention is an infrared heating unit which is modular and expandable as required. A unique infrared lamp reflector provides the highest resolution of infrared lighting. Heating units can be placed in series, before or after the dryer, or any combination depending upon the application. Infrared heating units can be used on both sides of the web or only one side. A single heating unit with lamps on both sides of the web can have 2000 watts/inch across the machine. The heating unit also has a self-contained cooling system. The infrared lamps are 2000 watts each and can have a minimum lamp life of 5000 hours. The reflector design blocks the light between adjacent lamps. This prevents light from effecting the web 4 or 5 zones away from the lamp that is illuminated. The reflector provides web support on shut down via air distribution and mechanical interference. Combined reflector cooling and impingement air contribute to increased efficiency. The infrared lamps are computer controlled.

## BRIEF DESCRIPTION OF THE DRAWINGS

Other objects of the present invention and many of the attendant advantages of the present invention will be readily appreciated as the same becomes better understood by reference to the following detailed description when considered in connection with the accompanying drawings, in which like reference numerals designate like parts throughout the figures thereof and wherein:

**FIG. 1** illustrates a perspective view of an infrared drying system, the present invention;

**FIG. 2** illustrates a perspective view of a pneumatic assembly for raising and lowering one of the infrared modules;

**FIG. 3** illustrates a perspective view of an infrared lamp and reflector;

**FIG. 4** illustrates an exploded perspective view of a module, of an infrared lamp and a reflector;

**FIG. 5** illustrates a perspective view of a casing assembly and a fan assembly;

**FIG. 6** illustrates a reflector casing and fan assembly aligned to a side mainframe;

**FIG. 7** illustrates infrared ray and gas flow through the infrared heating unit;

**FIG. 8** illustrates a perspective view of the heating unit;

**FIG. 9** illustrates a perspective view of a reflector;

**FIG. 10** illustrates an electromechanical block diagram of the infrared drying system;

**FIG. 11** illustrates a timing diagram for all power levels;

**FIG. 12** illustrates a flow chart of the main program loop which updates the lamp controllers;

**FIG. 13** illustrates a flow chart for processing moisture sensor date interrupts;

**FIG. 14** illustrates a flow chart for processing of clock interrupts; and,

**FIG. 15** is a circuit diagram for the phase lock loop which provides the timing input to procedure NMI.

## DESCRIPTION OF THE PREFERRED EMBODIMENTS

**FIG. 1** illustrates an infrared drying system 10 including opposing infrared drying modules 12 and 14, the subject matter of a co-pending patent application by Anderson, Serial No. , filed , entitled , and assigned to the same Assignee, and also as later described for drying a traveling web of material 16. Whereas a number of configurations are useful for practicing the present invention, one embodiment uses opposing infrared drying modules 12 and 14 in close proximity to a moisture sensor profile scanner 18 positioned in a belt and ball bearing track 20. Idler rollers 22 and 24, by example, support the traveling web of material 16 about the moisture sensor profile scanner 18 and through the opposing infrared drying modules 12 and 14. The moisture sensor profile scanner 18 connects to a moisture computer 26 for generating moisture content signals and position signals.

The moisture sensor profile scanner 18, the belt and ball bearing track 20 and the moisture computer 26 including a video monitor 28, keyboard 30 and paper printer 32 are commercially available as a system from Moisture Systems Corporation of Hopkinton, Massachusetts. The moisture computer 26 monitors and controls the moisture sensor profile scanner 18 and the moisture profile is displayed on a high resolution color CRT and can be printed to paper. A target profile setting is settable by an operator, such as through the keyboard 30 or a potentiometer 34.

A control computer 40 connects to a lamp computer 42 and controls power controllers 44 and 46 to supply power to each lamp of the infrared drying modules 12 and 14 as later described in detail. The lamp computer 42 switches the plurality of power controllers 44 and 46 corresponding to the upper and lower infrared drying modules 12 and 14 at particular time intervals of the cycles for the three-phase power as later described in detail. Power cable 48 connects the power from the power controllers 44 and 46 to the infrared drying modules 12 and 14 as later described in detail.

A base 60 with support structure 62 including upper members 64 and 66 support the belt and ball bearing track 20. Upper support structures 68 and 70 support the opposing infrared drying modules 12 and 14 about pivot points 72 and 73. Cables 74 and 76 control the pivot movement of the lower infrared drying module 14 with respect to the upper infrared drying module 12.

**FIG. 2** illustrates a perspective view of a cable assembly 80 on one side of the upper infrared drying module 12 such as for cable 74 including a pneumatic cylinder 82 and idler pulleys 84, 86, 88, 90 and 92. The structure mounts within a cavity 94 of the infrared drying module 12. A similar assembly (not shown) which cooperates with cable 176 is located within upper infrared drying module 12 on the opposite side of traveling web 16.

Turning now to Fig. 3, one embodiment of reflector 100 is illustrated where all numerals correspond to those elements previously described. The reflector 100 is preferably anoized clad aluminum in which dimples have been made to provide structural strength. The reflector 100 comprises a top substantially planar reflector portion 102 having opposed reflector side walls 104 and 106 that are increasingly angled away from each other as they extend downwardly from planar reflector portion 102. The particular angle will of course depend on the application, and specifically, the desired light dissipation pattern. Each reflector side wall 104 and 106 is bent to form channel bottoms 108 and 110. Preferably, the channel bottoms 108 and 110 are substantially U-shaped, and have rounded edges. Square edges, although functional, tend to create deleterious stress points in the reflector material. A plurality of holes 112 are formed in the reflector 100, as by drilling, so that the majority of their area occurs in the low point of said channel bottoms 108 and 110.

The reflector 100 houses lamp 114. Lamp 114 is preferably positioned inside reflector 100 near planar reflector portion 102 so as to prevent mechanical interference with the web on shut down. Lamp 114 emits light of the appropriate wavelength of infrared light, depending on the intended application. A suitable infrared lamp includes a 12" long, 2000 watt, 250 volt bulb. The lamp ends 116 and 118 of lamp 114 sit in aperture 120 of lamp holder 122 (only one shown) which is secured to the reflector casing 124 by suitable means, such as a cap screw and lockwasher (not shown). In the embodiment shown in Fig. 5, a series of three lamps 114 and reflector means 100 are housed in the reflector casing 124. The reflector casing 124 can of course be designed to house any number of lamps 114, depending on the intended application. This flexibility makes almost any size heating unit possible.

A reflector 100 and lamp retainer 126 is secured to the reflector casing 124, and specifically, to lamp holder 122, such as by fasteners connected through the illustrated holes. The reflector casing 124 is mounted in side mainframe 128 and an opposing like side mainframe (not illustrated) by securing flanges 130 and 132 of reflector casing 124 to lip 134 of the side mainframe 128. Side mainframe 128 can hold a plurality of reflector casing assemblies 136 in side-by-side relation.

**FIG. 4** illustrates an exploded view of a fan assembly 154 that is mounted on the top of reflector casing 124. During operation, the center of lamp 114 is typically the hottest. Convection currents through reflector 100 are optimized for cooling the assembly and for heating or drying the substrate where two fans are mounted near the center, in the longitudinal direction, of reflector 100, so that the largest volume of gas is moved at the hottest point. To this end fan plate 140 has two central apertures 142 and 144 in which fan 146 and another similar fan and fan guards, such as guard 148 are mounted. Fan plate brace 150 and another fan plate brace 152 of FIG. 5 are secured to fan plate 140 and fan 146 as shown. The fan assembly 154 is mounted on reflector casing 124 and on side mainframe 128 as shown in FIG. 3. A gasket 156 (see Fig. 3), such as a silicone gasket, may be placed between reflector casing 124 and the fan plate 140 to help seal the unit.

**FIG. 5** illustrates a reflector casing assembly 136 and fan assembly 154 where all numerals correspond to those elements previously described. The reflector casing assembly 136 secures to the side mainframe 128. The fan assembly 154 aligns with the reflector casing assembly 136 and secures to the side mainframe 128.

**FIG. 6** illustrates the assembled reflector casing assembly 136 and fan assembly 154 mated with each other and aligned to the side mainframe 128 to form an infrared heating unit 157. All other numerals correspond to those elements previously described.

**FIG. 7** illustrates the infrared rays and gas flow in the assembled infrared heating unit 157 where all numerals correspond to those elements previously described.

**FIG. 8** illustrates a complete heating unit 158 comprised of the upper infrared drying module 12 and the lower infrared drying module 14. Each drying module is comprised of a plurality of infrared heating units 157 which form the infrared drying modules 12 and 14 which align above and below a web slot 160. Side mainframe end covers 162, 164, 166 and 168 cooperate to secure about the infrared heating units 157 to form the heating unit 158.

**FIG. 9** illustrates a perspective view of an alternative reflector 100. Lamp 114 is housed in reflector 100 under planar reflector portion 102. Lamp ends 118 and 116 sit in aperture 120 in each end plate 170. Holes 112 are spaced apart from each other a distance such that there preferably are about two holes per inch of reflector.

Regardless of the particular reflector design embodiment used, the holes 112 should have sufficient diameters to allow enough gas to pass through for both cooling the reflector and heating or drying the web. The holes 112 should be substantially hidden from the lamp so as to mitigate deterioration of the reflector material. For a reflector housing a 12 inch lamp, about 2 holes per inch of reflector has been found to be effective. Also shown partially in this Figure are dimples 182 that can be formed in the surface of reflector 100, and which add strength thereto and improve the diffusion of radiation.

**FIG. 10** illustrates a block diagram of the structure of FIG. 1. All numerals correspond to those elements previously described. The control computer 40 receives moisture content signals, setpoint signal, and corresponding position signals and generates power level signals and corresponding zone signals. The lamp computer 42 generates control signals for the power controllers 44 and 46 for energizing each infrared lamp over a particular time interval to provide the desired power level.

## MODE OF OPERATION

The infrared drying system 10 includes the three computers, the moisture computer 26, the control computer 40, and the lamp computer 42. The first computer, the moisture computer 26 controls the moisture sensor profile scanner 18 and the moisture sensing head to provide a display. The moisture sensor profile scanner 18 generates a moisture content signal, a positioning signal is generated and a setpoint signal is operator set. The second computer, the control computer 40, generates power level signals and zone signals corresponding to those power level signals in response to the moisture signal. This computer determines, on averaging the moisture signals, whether more, less or no intensity is required by a lamp, such as an infrared lamp, over that particular zone of the traveling web of material 16. The third computer, the lamp computer 42, receives information from the control computer 40 as to each lamp or group of lamps for a particular power level. The lamp computer 42 provides that the lamp is switched on and off for the correct number of times over a given number of cycles to achieve a particular power level.

There are 16 power levels corresponding to 16 half cycles. The lamp computer 42 controls the power modules to switch power modules on and off as required to provide the desired power level. There is a separate power controller for each separate lamp in each reflector.

The signals transmitted from the control computer 40 to the lamp computer 42a-42n are digital signals in a ring communication configuration. More than one lamp computer 42 can be provided depending upon the size of the infrared drying system 10. This is especially useful for repeating the control signals for the lamp computer 42. A closed feedback loop connects from the lamp computer 42 or the last lamp computer to the control computer 40.

Each lamp computer 42 indicates its own phase lock loop. The phase lock loop is powered by any one of the three-phase lines as a reference from the main power. In the alternative, the power source can also be a combination of the two different phases with respect to the neutral as long as there is the same phase difference between the power that is used to power the lamps and the same frequency. A NMI signal, non-mask interrupt, controls the lamp computer 42. A flip-flop provides a condition for initial startup. In a normal startup, the circuits are inhibited from operating and then the VCO turns on after initialization

**FIG. 11** is a basic timing diagram for the illumination of the infrared lamps. The intensity of the lamps is controlled by adjusting the duty cycle. The overall timing is synchronized to the 60hz power line. For that reason, the basic timing period is 8 1/3 milliseconds, which is the period of a half cycle of the 60hz power cycle. The illumination cycle consists of 16 of the basic timing periods or 133 1/3 milliseconds. This is produced by simply counting 16 of the basic timing periods. Line 300 shows this timing period with pulses 302, 304, and 306 spaced 133 1/3 milliseconds apart and corresponding to the sixteenth zero crossing (i.e., half crossing) of phase one of the input power line. Two complete illumination cycles (i.e. 266 2/3 milleseconds) are shown for clarity.

Each of the 133 1/3 millisecond illumination cycles is divided into 16 equal periods of 8 1/3 milliseconds, corresponding to one-half of one 60hz power line cycle. Each of the 16 lamp intensity levels corresponds to a different number of energized 8 1/3 millisecond basic periods per 133 1/3 millisecond illumination cycle.

Line 308 corresponds to intensity level zero. This means that there are no energized basic periods during the illumination cycle.The result is that the corresponding infrared lamp remains off. Intensity level one is shown by line 310. It provides one basic period (i.e. 8 1/3 milliseconds) of energy during each illumination cycle (i.e. 133 1/3 milliseconds). Pulses 312, 314, and 316 provide the energy as shown. Similarly, line 318 has two energy pulses 317a and 317b providing a total of 16 2/3 milliseconds of energy during the first 133 1/3 milliseconds illumination cycle. This corresponds to intensity level two. Lines 319, 320, 322, 324. . .up to 340 show the energy pulses for intensity levels 3, 4, 5, 6. . .up to 15, respectively. Line 340 shows energy level 15, which has 15 basic periods of energy during the 133 1/3 millisecond illumination cycle meaning that the lamp is nearly on for the entire illumination cycle.

The flow charts of Figs. 12, 13, and 14 show basic operation of the software which controls the entire system and the infrared lamps in particular (see also Fig. 10). The main loop of the software is the procedure called UPDATE LAMPS shown in Fig. 12. This procedure continues to cycle during system operation to constantly update the intensity of each lamp. The interrupt routine of Fig. 13 processes the incoming sensor data from the moisture sensor computer. The interrupt routine of Fig. 14 provides system synchronization. It processes a non-maskable interrupt which is timed from the basic 60hz power line.

**FIG. 12** is a flow chart for the main loop of the program, UPDATE LAMPS. It runs in the normal (i.e. non-interrupt mode). The program is entered at system startup at element 200. The database is initialized at element 202. This includes clearing various counters and resetting certain flags. Reset LED is also turned on.

The condition of the system fan is checked at element 204. If it is determined that the fan is not on, element 205 sends a pulse to the fan contactor to energize the fan. Notice that control is returned to element 204 to recheck the condition of the fan. The program will not proceed further until the fan is on and up to speed. To do so would risk turning on the lamps without cooling air which might damage the system. To notify the operator, element 203 turns on the reset LED. As a result, reset LED is brightly lighted if the system remains in this loop.

After it has been determined that the fans are operating properly, control proceeds to element 206 which checks whether the pressure at air bar number one (i.e. within IR heating module 14) is adequate. If the pressure is not adequate, the program remains in this tight loop and the operator is again notified because element 203 keeps reset LED brightly lighted. If element 206 determines that the pressure of air bar number one is adequate, element 208 tests for the same condition with respect to air bar number two (i.e. infrared heating mode module 16). Notice that any number of critical system parameters may be checked in this fashion.

When these system parameters are found to be within operating range, element 210 updates the controls for the individual lamps. Control of the infrared lamps is through varying of the duty cycle. Because the 60hz power line provides the basic timing as explained above, the basic time period is 8 1/3 milliseconds or the period of one-half of one 60hz power cycle. As further explained above, the illumination cycle is 16 basic time periods.

The data word fetched for each lamp consists of a word herein the bit positions correspond to one of the 16 basic timing periods within the illumination cycle. The lamp is to be energized for the correct basic timing periods.

When all lamps have been serviced during the update function 210, control is then transferred to element 203 which toggles reset LED. Notice that in proper operation, reset LED is toggled once per basic timing period causing it to glow at half of full brilliance. This glow shows the operator that the program is functioning properly. If the reset LED is totally extinguished, the program is no longer running. If the reset LED is too bright, it indicates a system problem with the fan or air bar pressures as described above.

**FIG. 13** is a flow chart for the procedure which processes the input from the moisture sensing computer. The communication is implemented with a universal asynchronous receiver/transmitter (UART) in the manner known in the art. When a complete word is received by the UART, an interrupt is generated which causes entry at element 230. The procedure is initialized at element 232 and the UART LED is toggled at element 234. Elements 236 and 238 store a word and increment bit count. Element 240 tests whether the word received is valid. If yes, element 242 stores the received word. Element 244 increments lamp counter, element 246 is for all lamps done, and element 248 is for reset lamp counter. Exit is via element 250.

**FIG. 14** is a flow chart of the procedure which supplies the main timing for the system. It is started by a non-maskable interrupt caused by precise timing of the phase lock loop (PLL) circuit. Upon receipt of the interrupt, entry is via element 252. The procedure is initialized at element 254. At each pass through the NMI procedure, a computer is masked for operation from 0-15 by element 256. Depending upon the state of this counter, bits are selected and transferred to the output ports which in turn turn on or off the IR lamps. Control is next given to element 258 which toggles NMI LED after 128 interrupts. Element 260 is increment clock count, element 262 is all 16 intervals, and element 264 is reset clock count. This indicates proper operation of the timing logic to the operator as described above with regard to the other LED's. Exit is via element 266.

**FIG. 15** is a schematic diagram for the circuitry which provides the basic timing for the system and which selects energization points of the infrared lamps for three-phase power. There are three complete cycles for all three phases of power. Each complete cycle has two zero crossings which basically states that there are going to be six zero crossings for the three phases and the crossings are going to be equally spaced because of the nature of the three phases. By taking the time period from zero, which is a zero crossing for any one of the three phases, the next positive zero crossing or one complete cycle is divided into six equal segments to determine the timing of each of the crossings. One does not want the computer to do anything exactly at the zero crossing. One then generates a signal which is actually 600hz, which is ten times higher than the 60hz signal, and these signals do not coincide with the zero crossings of the 60hz signal. The preferred crossings are 1.1 milliseconds after the last zero crossing and 1.6 milliseconds until the next zero crossing because there is enough time provided to command the computer to complete all necessary computations before the next zero crossing occurs. This provides sufficient time to switch the power controllers. The phase lock loop circuit is utilized to provide time periods which do not coincide with the zero crossings and provide time periods which are substantially half way between the zero crossings of the 60hz three-phase power. The preferred timing points are generated by the phase lock loop circuitry of FIG. 15, and particularly the timing points referring to number 4 position and number 9 position which provide the most effective time utilization before and after the last zero crossings. Therefore, the power controllers are switched at time period 4 and time period 9 as the time signals are farthest away from each of the zero crossings.

As can be seen, one phase of the 60hz signal (at 24 volts) is presented via series resistor 502 to series coupled operation amplifiers 504 and 506. The signal is applied to phase lock loop (PLL) 508. The output of PLL 508 is a pulse train of 600hz which has a fixed phase relationship to the 60hz power line input. The output is divided by ten by counter 510. Outputs 49 and 44 of counter 510 are amplified by NPN transistor to become the NMI interrupt (see FIG. 14 for the software which handles this interrupt).

Appendix 1 sets forth a specific example of an infrared drying system 10 with two opposing lamps with 16 power levels and is expandable to 128 lamps. The appendix includes a general description, a control box description, a program description, a software listing and three flow charts for reset, interrupt, and non-maskable interrupt.

Various modifications can be made to the present invention without departing from the apparent scope hereof.

## Claims

1. Infrared drying system comprising:
   a. traveling web of material and means for supporting said web;
   b. sensing means supported above said web and traveling across the width of said web;
   c. means for generating profile signals of the output of said sensing means across the width of said web with respect to a set point;
   d. means for generating a plurality of control signals for switching a power controller including storage means, said storage means including an algorithm for switching power to an infrared lamp;
   e. infrared module means positioned above said web in proximity to said sensing means; and,
   f. power controllers connected between a source of power and each of said infrared lamps and to each of said control signals for controlling each of said infrared means.
2. Infrared drying system comprising:
   a. sensing means for generating a signal movably positioned on a transparent means for traveling across the width of a traveling web;
   b. processor means including means for processing said signal and generating a profile signal with respect to the width of said web;
   c. means for storing an algorithm of moisture content and for generating control signals in response to profile signals; and,
   d. controller means for switching to at least one of a plurality of power to heater means for correcting a predetermined section of said web.
3. A method of drying a traveling web of material comprising:
   a. positioning a plurality of independently controlled drying elements across the width of said traveling web of material wherein each of said plurality of said independently controlled drying elements corresponds to a different one of a plurality of divisions of said width of said traveling web of material;
   b. sensing each of said plurality of divisions of said width;
   c. increasing the intensity of each of said plurality of said independently controlled drying elements whenever said corresponding one of said plurality of divisions of said width of said traveling web of material is greater than a first desired threshold; and,
   d. decreasing the intensity of each of said plurality of said independently controlled drying elements whenever said corresponding one of said plurality of divisions of said width of said traveling web of material is less than a second desired threshold.
4. An apparatus for drying a traveling web of material comprising:
   a. means for sensing the content of said traveling web of material as a function of the distance across the width of said traveling web of material;
   b. a plurality of drying elements wherein each of said plurality of drying elements drys a different portion of said width of said traveling web of material; and,
   c. means responsively coupled to said sensing means and said plurality of drying elements for increasing the intensity of a one of said plurality of drying elements corresponding to said different portion of said width of said traveling web of material if said sensing indicates that said different portion of said width of said traveling web of material is greater than a first threshold.
5. An apparatus for drying a travelling web of material according to claim 4 further comprising means responsively coupled to said sensing means, said plurality of drying elements, and said increasing means for decreasing the intensity of said one of said plurality of drying elements corresponding to said different portion of said width of said travelling web of material if said sensing indicates that said different portion of said width of said travelling web of material is less than a second threshold.
6. An apparatus according to claim 4 or 5 further comprising a plurality of air bars for supporting said travelling web of material.
7. An apparatus according to claim 6 wherein said plurality of drying elements are fixedly attached to said plurality of air bars.
8. An apparatus according to any one of claims 4 to 7 wherein said plurality of drying elements comprises a plurality of infrared lamps.
9. An apparatus according to any one of claims 4 to 8 wherein said increasing means and said decreasing means further comprises a computer.

10. An apparatus according to claim 8 wherein said increasing means and said decreasing means further comprises hardwired logic circuitry.

[illegible]

The following files are used for documentation of this project:

```
D:\SCHEMA\GBP-CONF.P01, B01, CFG
D:\SCHEMA\GBP-FIL.P01, P02, B01, B02, CFG
D:\SCHEMA\GBP-PW.P01, B01, CFG
D:\SCHEMA\GBP-AI5.P01,P02,P03,P04,P05,B01,B02,B03,B04,B05,CFG
D:\SCHEMA\GBP-CON.P01, B01, CFG
D:\EASYFLOW\GBP-IRQ.EFS, BAK
D:\EASYFLOW\GBP-NMI.EFS, BAK
D:\EASYFLOW\GBP-RES.EFS, BAK
D:\6502\GBP\ALL.GBP, BAK
D:\6502\GBP\CONT-GBP.BAS
D:\6502\GBP\CONT.GBP
D:\6502\GBP\CTRL GBP GBP, HEX
D:\6502\GBP\EPROM.HEX
D:\6502\GBP\GBNMI.BAK
D:\6502\GBP\GBUF.BAK
D:\6502\GBP\IRQ.GBP, BAK
D:\6502\GBP\MEMORY.GBP, BAK
D:\6502\GBP\NMI.GBP, BAK
D:\6502\GBP\RESET.GBP, BAK
D:\6502\GBP\TABLE.GBP, BAK
```

GENERAL:

The purpose of this electrical system is to control the power to two IR air bars mounted to a single press and used in a testing mode. The electrical system will power either 380 volt (short wave) or 480 volt (medium wave) lamps.

The system is powered by 480 volt, 3 phase, 60 hertz, delta connected power. Since only two lamps are used, an unequal phase load will be present. Lamp #1 is connected to phase A and B. Lamp #2 is connected to phase B and C. A 7.5 horsepower fan motor is also powered by this system. Operating at full power or 7 kilowatt per lamp, phase A will draw 25 ampere, phase B will draw 35 ampere and phase C will draw 25 ampere.

Two 2 kva universal control transformers are used in the "buck" mode to reduce the 480 volt level to 380 volts when 380 volt operation is desired. Voltage mode selection is made by connecting one lamp lead to either the T1 terminal on the lamp contactor for 380 volt operation or to the T2 terminal on the lamp contactor for 480 volt operation. The other lead of the lamp is connected to terminal #2 of the appropriate solid state relay.

... operation of each lamp at any one of 16 power levels as set by the control box. A 6502 based micro computer is used to read the signal from the control box, check for lamp operation, check for pressure switch operation and in turn, control the fan operation and generate timing signals for lamp operation.

CONTROL BOX:

The control box is powered by 110 volts AC and generates appropriat signals that are sent to the micro-computer over a balanced RS-422 type line. The communications parameters are 1200 baud 8 data bits, 2 stop bits and even parity. The desired code is repeated every 1.7 seconds. The code consists of three characters, "Axy" where "x" is the power level code for lamp #1 and "y" is the power level code for lamp #2. The code sent may also be "R" when the toggle switch on the control box is off. This will cause the micro-computer to set all lamps to the "zero" power level.

Code generation for the control box is done by using an EPROM that is programmed to contain all the necessary codes. These codes are derived using a "Basic" program. The control box has the capability of sending a string of eight characters. Although this application needs a string of one or three in length, it is desired to send a carriage return and line feed after each string. This would require a string of five characters. Since eight is the next logical string length, eight is what is available.

The control box has the capability of sending no code at a given time by simply making the high high order bit "1". As a result, the following codes are programmed and sent by the control box;

Time #0 - no character sent <n/c>
Time #1 - <n/c>
Time #2 - <n/c>
Time #3 - "A" or <n/c> if the toggle switch is off
Time #4 - power code for lamp #1 or <n/c> if the toggle switch is off
Time #5 - power code for lamp #2 or "R" if the toggle switch is off
Time #6 - carriage return
Time #7 - line feed

The power codes for the sixteen power levels are the characters "0" to "9" for the first ten levels plus the characters ":", ";", "<", "=", ">" and "?" in the order as listed.

[illegible]

In addi[illegible] to the control box serial input to the micro-computer [illegible]here are three additional control inputs. The first is a 1[illegible] volt signal confirming that the press is running at or above [illegible] of its rated speed. The remaining two inputs are also 110 volt levels connected to two pressure switches, one on each air bar. [illegible]hese inputs confirm that the supply air is indeed getting [illegible] the air bars. The 10% speed input is required to turn on the [illegible]n motor starter. All three inputs are required to turn on the l[illegible]p contactors and start the power level increase to the levels sent by the control box.

There is one final input signal that is required for operation. This is a synchronization signal supplied by a small 24 volt transformer. This signal is fed to a phase lock loop circuit that generates a non-maskable interrupt at a precise time that does NOT correspond to the zero crossing of any of the three phases of the supply power. The actual time of the signal is 1.11 millisecond after a zero crossing and 1.67 millisecond before the next crossing. These interrupts occur at a rate of 120 per second (assuming 60 hertz line frequency).

There are a total of eight outputs provided with the system. Three of these outputs simply drive individual LED's for indication of operation. The "Reset" output or LED is on during initialization and then toggles each time the main loop of the micro-computer program is started. Since the main program loop runs extremely fast, the LED does not appear to toggle. It only appears slightly dim with respect to the other LED's. The "IRQ" output or LED toggles each time a valid control character is received from the control box. The "NMI" output or LED toggles after each 128 interrupts or each 128/120 or 1.07 seconds.

Three of the remaining outputs drive three solid state relays that in turn drive the two lamp contactors and the fan motor starter. The remaining two outputs drive two solid state relays that control the intensity of each lamp.

The 690 byte program along with the 512 byte look-up tables are contained in a single 4 kilobyte (4096 byte) EPROM. A total of 901 bytes of RAM are required for temporary storage. Although 1 kilobyte would be sufficient, 3 kilobytes are provided.

The micro-computer, although being used to control two lamps, has all the memory and program requirements to control 128 lamps. The program will run as it is now, with no additional time delays, when controlling up to 128 lamps.

At power on time, the micro-computer program initializes a few pointers, turns off all outputs and zeros all setpoints. The program then checks to see if the press speed input is on and if the pressure switches are on. If they are on, the program continues. If the inputs are not on, a check is made to see if the press speed input is on. If it is on, the fan motor starter is turned on and the lamp contactors are turned off. If the press speed is not on, the fan starter and the lamp contactors are turned off and the program restarts from very close to the beginning of the initialization procedure.

When the program continues, as explained before, the setpoint for the current lamp is compared to the output level. If the setpoint is the same as the output, the current lamp is advanced and that lamp is checked in the same way. If the setpoint is less than the output, the output is made the same as the setpoint. The program then updates the "bit maps" used to control the lamp intensity. If the setpoint is larger than the output, a check is made to see if one second has elapsed since the output level of this lamp has been increased. If one secondhas elapsed, the output level is increased by one and the "bit maps" are updated. After the "bit maps" are updated, the current lamp is advanced and that lamp is checked in the same way. If the setpoint is larger than the output and one second has NOT elapsed since the output was increased, the current lamp is advanced and that lamp is checked in the same way.

The program checks all 128 possible lamps in about two milliseconds. This includes the time required for the two interrupt routines to take place.

The IRQ or interrupt request is executed when a character is received by the UART (Universal Asynchronous Receiver Transmitter). A check is made to be sure the character was received correctly. If an error is detected, the micro-computer is forced into a re-initialization. The character is then examined to determine what action to take. If the character is "A" through "P" the lamp number is set accordingly. "A" will set the lamp number for 0, "B" will set the lamp number for 8, and so forth up to "P" setting the lamp number up to 120.

If the character received is "0" through "?" as explained before with the controller box, the lamp number setpoint is made the corresponding power level, 0 to 15. The lamp number is then incriminated by one. If a "+" character is received, the lamp number is incriminated by one. If the character received is a "-" the lamp number decrements by one. If a "R" is received, all lamp setpoints are set to zero.

[illegible] on the character received, IRQ routine is [illegible] and the main program loop continues.

The NMI or non-maskable interrupt occurs 120 times a second. During each interrupt, the lamp phase counter is incriminated and the 16 defined, 8 bit output ports are set for the current output levels and lamp phase as determined by the output bit maps. This normally completes the interrupt routine except when the lamp phase counter reaches 128. When this happens, all 128 lamp increment flags are set. These flags are used to determine the elapsed time between increments of the output levels for each lamp. This completes the interrupt routine and the main program loop continues.

```
ALL.LST                 [illegible]                                      Page 1

                ;BASE:   EQU     0F000H    ;USE FOR ACTUAL ADDRESSES
0000 =          BASE:    EQU     00000H    ;USE FOR EEPROM CODE

F100 =          [illegible]  EQU  0F100H
F000 =          [illegible]  EQU  0F000H
F200 =          RESVE[illegible]  EQU  0F200H


0000                     INCL    "TABLE.GRP"
                ;***********************************************************
                ;****************** TABLE **********************************
                ;***********************************************************


0000                     CPU     "6502.TBL"
0000                     HOF     "INT8"

0000                     ORG     BASE + 00000H

                ;***** PORT NUMBER TABLE *************
                ; ALL USED PORTS HAPPEN TO BE ZERO

0000 00000000            DFB     0, 0, 0, 0        ;LAMP 0
0004 00000000            DFB     0, 0, 0, 0        ;LAMP 4
0008 00000000            DFB     0, 0, 0, 0        ;LAMP 8
000C 00000000            DFB     0, 0, 0, 0        ;LAMP 12
0010 00000000            DFB     0, 0, 0, 0        ;LAMP 16
0014 00000000            DFB     0, 0, 0, 0        ;LAMP 20
0018 00000000            DFB     0, 0, 0, 0        ;LAMP 24
001C 00000000            DFB     0, 0, 0, 0        ;LAMP 28
0020 00000000            DFB     0, 0, 0, 0        ;LAMP 32
0024 00000000            DFB     0, 0, 0, 0        ;LAMP 36
0028 00000000            DFB     0, 0, 0, 0        ;LAMP 40
002C 00000000            DFB     0, 0, 0, 0        ;LAMP 44
0030 00000000            DFB     0, 0, 0, 0        ;LAMP 48
0034 00000000            DFB     0, 0, 0, 0        ;LAMP 52
0038 00000000            DFB     0, 0, 0, 0        ;LAMP 56
003C 00000000            DFB     0, 0, 0, 0        ;LAMP 60
0040 00000000            DFB     0, 0, 0, 0        ;LAMP 64
0044 00000000            DFB     0, 0, 0, 0        ;LAMP 68
0048 00000000            DFB     0, 0, 0, 0        ;LAMP 72
004C 00000000            DFB     0, 0, 0, 0        ;LAMP 76
0050 00000000            DFB     0, 0, 0, 0        ;LAMP 80
0054 00000000            DFB     0, 0, 0, 0        ;LAMP 84
0058 00000000            DFB     0, 0, 0, 0        ;LAMP 88
005C 00000000            DFB     0, 0, 0, 0        ;LAMP 92
0060 00000000            DFB     0, 0, 0, 0        ;LAMP 96
0064 00000000            DFB     0, 0, 0, 0        ;LAMP 100
0068 00000000            DFB     0, 0, 0, 0        ;LAMP 104
006C 00000000            DFB     0, 0, 0, 0        ;LAMP 108
0070 00000000            DFB     0, 0, 0, 0        ;LAMP 112
0074 00000000            DFB     0, 0, 0, 0        ;LAMP 116
```

```
ALL.LST                                                                    Page 2

0078 00000000          DFB     0, 0, 0, 0            ;LAMP 120
007C 00000000          DFB     0, 0, 0, 0            ;LAMP 124

             ;************ LAMP BIT MASK **************

0080                   ORG     BASE + 0080H

0080 01020408          DFB     1H,  2H,  4H,  8H           ;LAMP 0
0084 10204080          DFB     10H, 20H, 40H, 80H          ;LAMP 4
0088 00000000          DFB     0H,  0H,  0H,  0H           ;LAMP 8
008C 00000000          DFB     0H,  0H,  0H,  0H           ;LAMP 12
0090 00000000          DFB     0H,  0H,  0H,  0H           ;LAMP 16
0094 00000000          DFB     0H,  0H,  0H,  0H           ;LAMP 20
0098 00000000          DFB     0H,  0H,  0H,  0H           ;LAMP 24
009C 00000000          DFB     0H,  0H,  0H,  0H           ;LAMP 28
00A0 00000000          DFB     0H,  0H,  0H,  0H           ;LAMP 32
00A4 00000000          DFB     0H,  0H,  0H,  0H           ;LAMP 36
00A8 00000000          DFB     0H,  0H,  0H,  0H           ;LAMP 40
00AC 00000000          DFB     0H,  0H,  0H,  0H           ;LAMP 44
00B0 00000000          DFB     0H,  0H,  0H,  0H           ;LAMP 48
00B4 00000000          DFB     0H,  0H,  0H,  0H           ;LAMP 52
00B8 00000000          DFB     0H,  0H,  0H,  0H           ;LAMP 56
00BC 00000000          DFB     0H,  0H,  0H,  0H           ;LAMP 60
00C0 00000000          DFB     0H,  0H,  0H,  0H           ;LAMP 64
00C4 00000000          DFB     0H,  0H,  0H,  0H           ;LAMP 68
00C8 00000000          DFB     0H,  0H,  0H,  0H           ;LAMP 72
00CC 00000000          DFB     0H,  0H,  0H,  0H           ;LAMP 76
00D0 00000000          DFB     0H,  0H,  0H,  0H           ;LAMP 80
00D4 00000000          DFB     0H,  0H,  0H,  0H           ;LAMP 84
00D8 00000000          DFB     0H,  0H,  0H,  0H           ;LAMP 88
00DC 00000000          DFB     0H,  0H,  0H,  0H           ;LAMP 92
00E0 00000000          DFB     0H,  0H,  0H,  0H           ;LAMP 96
00E4 00000000          DFB     0H,  0H,  0H,  0H           ;LAMP 100
00E8 00000000          DFB     0H,  0H,  0H,  0H           ;LAMP 104
00EC 00000000          DFB     0H,  0H,  0H,  0H           ;LAMP 108
00F0 00000000          DFB     0H,  0H,  0H,  0H           ;LAMP 112
00F4 00000000          DFB     0H,  0H,  0H,  0H           ;LAMP 116
00F8 00000000          DFB     0H,  0H,  0H,  0H           ;LAMP 120
00FC 00000000          DFB     0H,  0H,  0H,  0H           ;LAMP 124

             ;*********************************************
             ;****** POWER LEVEL TABLE *****************
             ;*********************************************

00FF =           X:       EQU     0FFH
0000 =           O:       EQU     000H
```

```
ALL [illegible]            [illegible]                                  Page 3

0100                       ORG     PAGE [illegible]

0100 00000000              DFB     0, 0, 0, 0        ;LEVEL 0
0104 00000000              DFB     0, 0, 0, 0
0108 00000000              DFB     0, 0, 0, 0
010C 00000000              DFB     0, 0, 0, 0

0110 00000000              DFB     0, 0, 0, 0        ;LEVEL 1
0114 00000000              DFB     0, 0, 0, 0
0118 00000000              DFB     0, 0, 0, 0
011C 000000FF              DFB     0, 0, 0, X

0120 00000000              DFB     0, 0, 0, 0        ;LEVEL 2
0124 000000FF              DFB     0, 0, 0, X
0128 00000000              DFB     0, 0, 0, 0
012C 000000FF              DFB     0, 0, 0, X

0130 00000000              DFB     0, 0, 0, 0        ;LEVEL 3
0134 00FF0000              DFB     0, X, 0, 0
0138 0000FF00              DFB     0, 0, X, 0
013C 000000FF              DFB     0, 0, 0, X

0140 000000FF              DFB     0, 0, 0, X        ;LEVEL 4
0144 000000FF              DFB     0, 0, 0, X
0148 000000FF              DFB     0, 0, 0, X
014C 000000FF              DFB     0, 0, 0, X

0150 000000FF              DFB     0, 0, 0, X        ;LEVEL 5
0154 0000FF00              DFB     0, 0, X, 0
0158 00FF0000              DFB     0, X, 0, 0
015C FF0000FF              DFB     X, 0, 0, X

0160 0000FF00              DFB     0, 0, X, 0        ;LEVEL 6
0164 FF0000FF              DFB     X, 0, 0, X
0168 0000FF00              DFB     0, 0, X, 0
016C FF0000FF              DFB     X, 0, 0, X

0170 0000FF00              DFB     0, 0, X, 0        ;LEVEL 7
0174 FF00FF00              DFB     X, 0, X, 0
0178 00FF00FF              DFB     0, X, 0, X
017C 00FF00FF              DFB     0, X, 0, X

0180 00FF00FF              DFB     0, X, 0, X        ;LEVEL 8
0184 00FF00FF              DFB     0, X, 0, X
0188 00FF00FF              DFB     0, X, 0, X
018C 00FF00FF              DFB     0, X, 0, X

0190 FFFF00FF              DFB     X, X, 0, X        ;LEVEL 9
0194 00FF00FF              DFB     0, X, 0, X
0198 FF00FF00              DFB     X, 0, X, 0
019C FF00FF00              DFB     X, 0, X, 0

01A0 FFFF00FF              DFB     X, X, 0, X        ;LEVEL A
01A4 00FFFF00              DFB     0, X, X, 0
```

```
01A8 FFFF00FF      DFB   X, X, O, X
01AC 00FFFF00      DFB   O, X, X, O

01B0 FFFFFF00      DFB   X, X, X, O        ;LEVEL B
01B4 FFFF00FF      DFB   X, X, O, X
01B8 FF00FFFF      DFB   X, O, X, X
01BC 00FFFF00      DFB   O, X, X, O

01C0 FFFFFF00      DFB   X, X, X, O        ;LEVEL C
01C4 FFFFFF00      DFB   X, X, X, O
01C8 FFFFFF00      DFB   X, X, X, O
01CC FFFFFF00      DFB   X, X, X, O

01D0 FFFFFFFF      DFB   X, X, X, X        ;LEVEL D
01D4 FF00FFFF      DFB   X, O, X, X
01D8 FFFF00FF      DFB   X, X, O, X
01DC FFFFFF00      DFB   X, X, X, O

01E0 FFFFFFFF      DFB   X, X, X, X        ;LEVEL E
01E4 FFFFFF00      DFB   X, X, X, O
01E8 FFFFFFFF      DFB   X, X, X, X
01EC FFFFFF00      DFB   X, X, X, O

01F0 FFFFFFFF      DFB   X, X, X, X        ;LEVEL F
01F4 FFFFFFFF      DFB   X, X, X, X
01F8 FFFFFFFF      DFB   X, X, X, X
01FC FFFFFFFF      DFB   X, X, X, X



0200                     INCL    "RESET.GBP"
              ;*********************************************************
              ;****************************  RESET  *******************
              ;*********************************************************

              ;RESET AND MAIN PROGRAM LOOP FOR GREATER BUFFALO PRESS

0200                     ORG     PAGE + 00200H

              ;THE FIRST THING TO DO IS TO SET UP THE STACK POINTER

0200 A2FF     START:     LDX     #0FFH
0202 9A                  TXS                 ;SET STACK POINTER
0203 78                  SEI                 ;JUST IN CASE
              ;TO PREVENT NMI FROM SCREWING THINGS UP BEFORE WE'RE
```

```
                         ;REALY. THE NMI [illegible] CHECK THREE MEMORY
                         ;LOCATIONS FOR [illegible] PATTERN. IF WRONG,
                         ; INTERRUPT [illegible]
0204 A9FF                    LDA      [illegible]     ;[illegible] BYPASS
0206 8D0003                  STA      [illegible]     ;[illegible] MUST BE 00
0209 8D0103                  STA      [illegible]     ;[illegible] MUST BE 55
020C 8D0203                  STA      [illegible]     ;[illegible] MUST BE AA
                         ;ALL ACTUAL OUTPUT PORTS ARE SET TO ZERO SO LAMPS ARE OFF
020F A900                    LDA      [illegible]     ;[illegible] OUTPUT PORTS
0211 8D0403                  STA      [illegible]     ;SET CURRENT LAMP TO ZERO
0214 8D0498                  STA      [illegible]
0217 8D0498                  STA      [illegible]     ;PORT 11
021A 8D0498                  STA      [illegible]
021D 8D0498                  STA      [illegible]
0220 8D0498                  STA      [illegible]
0223 8D0498                  STA      [illegible]     ;PORT 10
0226 8D0498                  STA      [illegible]     ;ALL THESE ARE ACTUALLY
0229 8D0498                  STA      9804H      ;EACH PORT ADDRESS
022C 8D0498                  STA      9804H
022F 8D0498                  STA      9804H
0232 8D0498                  STA      9804H      ;PORT 5
0235 8D0498                  STA      9804H
0238 8D0498                  STA      9804H
023B 8D0498                  STA      9804H
023E 8D0498                  STA      9804H
0241 8D0498                  STA      9804H      ;PORT 0
                         ;THERE IS AN LED ON THIS BIT.. IF ON, THERE IS TROUBLE
0244 A980                    LDA      #80H       ;TURN ON TROUBLE BIT
0246 8D8503                  STA      0385H      ;SAVE IN MIRROR
0249 8D0598                  STA      9805H      ;SAVE IN PORT
                         ;ALL ARRAYS IN RAM ARE SET TO ZERO
024C A900                RESET:  LDA  #00H       ;ZERO ARRAYS
024E AA                      TAX
024F CA                  MIRROR: DEX             ;START LOOP, PORT MIRRORS
0250 9500                    STA      00H,X
0252 D0FB                    BNE      MIRROR
0254 A280                    LDX      #80H
0256 CA                  FLAGS:  DEX             ;START LOOP, INCREMENT FLAGS
0257 9D0003                  STA      0300H,X
025A D0FA                    BNE      FLAGS
025C A200                    LDX      #00H       ;JUST IN CASE
025E CA                  LEVELS: DEX             ;START LOOP-OUTPUT
                                                 ; LEVELS & SETPOINTS
025F 9D0002                  STA      0200H,X
0262 D0FA                    BNE      LEVELS     ;END ARRAY ZERO
                         ;THE UART WILL BE SET UP,
                         ; AND READ A COUPLE OF TIMES TO CLEAR
0264 A90F                    LDA      #0FH       ;INITIALIZE UART
0266 8D0198                  STA      9801H      ;SET CONTROL BITS
0269 AD0198                  LDA      9801H      ;READ UART
026C AD0198                  LDA      9801H      ;READ UART
026F AD0098                  LDA      9800H      ;READ UART STATUS
0272 2938                    AND      #38H       ;MASK FOR STATUS BITS
0274 F003                    BEQ      NM1        ;ALL OK IF ZERO
0276 18                      CLC
```

```
0277 9087            BCC     START      ;START OVER
                ;WE CAN NOW ALLOW NMI TO TAKE PLACE SO WE WILL CHANGE
                ;THE BIT PATTERNS
0279 58         NMI:  CLI                ;ALLOW INTERRUPTS
027A A900             LDA     #00H
027C 8D8003           STA     0380H      ;BYTE MUST BE 00
027F A955             LDA     #55H
0281 8D8103           STA     0381H      ;BYTE MUST BE 55
0284 A9AA             LDA     #0AAH
0286 8D8203           STA     0382H      ;BYTE MUST BE AA
                                         ;NMI IS NOW ENABLED
                ;****************************************************
                ;***** THIS IS THE START OF THE MAIN LOOP *****
                ;****************************************************

0289 A280       AGAIN:  LDX   #80H       ;START WITH LAMP 128
028B A980               LDA   #80H       ;MASK FOR TROUBLE BIT
028D 4D8503             EOR   0385H      ;INVERT TROUBLE BIT OF MIRROR
0290 8D8503             STA   0385H      ;SAVE MIRROR
0293 8D0598             STA   9805H      ;TRANSFER TO OUTPUT
0296 CA         LOOPM:  DEX              ;LAMP COUNT
0297 AD0098             LDA   9800H      ;CHECK FOR GO SIG.
029A 2907               AND   #07H       ;MASK FOR D0, D1, D2
029C F022               BEQ   LOOPM1     ;IF OK CONT.
029E 2901               AND   #01H       ;IS SPEED SIGNAL ON?
02A0 F00E               BEQ   LOOP2      ;SPEED SIG IS ON IF ZERO
02A2 AD8503     OFFR:   LDA   0385H      ;GET MIRROR
02A5 29F8               AND   #0F8H      ;TURN OFF ALL
02A7 8D8503             STA   0385H      ;SAVE MIRROR
02AA 8D0598             STA   9805H      ;SAVE OUTPUT
02AD 18                 CLC
02AE 909C               BCC   RESET
02B0 AD8503     LOOP2:  LDA   0385H      ;GET MIRROR
02B3 0904               ORA   #04H       ;MAKE SURE FAN IS ON
02B5 29FC               AND   #0FCH      ;CONTACTORS OFF
02B7 8D8503             STA   0385H      ;SAVE MIRROR
02BA 8D0598             STA   9805H      ;SAVE OUTPUT
02BD 18                 CLC
02BE 908C               BCC   RESET      ;ALMOST START OVER IF [OK]
02C0 AD8503     LOOPM1: LDA   0385H      ;GET OUTPUT MIRROR
02C3 0907               ORA   #07H       ;TURN ON CONTACTORS
02C5 8D8503             STA   0385H      ;SAVE MIRROR
02C8 8D0598             STA   9805H      ;SAVE OUTPUTS
02CB BD0002             LDA   0200H,X    ;GET SETPOINT
02CE DD8002             CMP   0280H,X    ;CALCULATE SETPOINT-OUTPUT LEVEL
02D1 F051               BEQ   COUNT      ;ALL IS NORMAL,
                                         ; LET'S GET OUT OF HERE
02D3 1006               BPL   RAMP       ;GO TO RAMP IF SETPOINT IS LARGER
02D5 9D8002             STA   0280H,X    ;CHANGE OUTPUT TO SETPOINT
                                         ;IF SETPOINT IS LESS
02D8 18                 CLC
02D9 900D               BCC   UPDATE     ;GOTO UPDATE OUTPUT
02DB BD0003     RAMP:   LDA   0300H,X    ;CHECK INCREMENT FLAG
02DE F044               BEQ   COUNT      ;CAN'T DO ANYTHING NOW,
                                         ; WE BE OUTA HERE
```

```
02E0 FE9002          INC     0900H,X  ;INCREMENT OUTPUT BY ONE
02E3 A900            LDA     #00H
02E5 9D0003          STA     0300H,X  ;CLEAR THE INCREMENT FLAG
                ;UPDATE OUTPUTS
02E8 BD8002  UPDATE: LDA     0280H,X  ;GET THE CURRENT OUTPUT LEVEL
02EB 0A              ASL     A
02EC 0A              ASL     A
02ED 0A              ASL     A
02EE 0A              ASL     A        ;PUT THIS POWER LEVEL IN THE
                                      ;HIGH ORDER NIBBLE
02EF A8              TAY              ;NOW WE CAN PULL OUT THE
02F0 B900F1  POWER:  LDA     0F100H,Y ;PROPER BIT PATTERN
02F3 3D80F0          AND     0F080H,X          ;MASK FOR CORRECT BIT
02F6 48              PHA              ;PUSH ON THE STACK.
                                      ; COUNT 0 FIRST - COUNT F LAST
02F7 C8              INY              ;NEXT COUNT
02F8 98              TYA              ;LETS CHECK THE COUNT FIRST
02F9 290F            AND     #0FH     ;MASK TO LOW ORDER NIBBLE
                                      ;IF ZERO, WE DONE
02FB D0F3            BNE     POWER    ;IF NOT ZERO, KEEP GOING
                ;NOW UPDATE THE MIRROR
02FD A9F0            LDA     #0F0H    ;START WITH COUNT F
02FF 7D00F0          ADC     0F000H,X          ;OFFSET BY PORT NUMBER
0302 A8              TAY              ;GET THAT ADDRESS INTO Y
0303 68      COUNT1: PLA              ;GET COUNT FROM STACK
                                      ; F FIRST, 0 LAST
0304 F009            BEQ     OFF      ;BRANCH IF THE BIT TURNS OFF
0306 190000          ORA     00H,Y    ;GET CURRENT BIT PATTERN PLUS ONE
                                      ; BIT ON FOR SURE
0309 990000          STA     00H,Y    ;SAVE THE NEW PATTERN
030C 18              CLC
030D 900B            BCC     INDEX    ;NOTHING ELSE TO DO
030F BD80F0  OFF:    LDA     0F080H,X          ;GET THE BIT
                                      ; WE HAVE TO TURN OFF
0312 49FF            EOR     #0FFH    ;ALL ONES EXCEPT ONE 0, RIGHT?
0314 390000          AND     00H,Y    ;RETAIN CURRENT, EXCEPT ONE BIT IS
                                      ; OFF FOR SURE
0317 990000          STA     00H,Y    ;SAVE THE NEW PATTERN
031A 98      INDEX:  TYA              ;LETS GET THE INDEX BACK
031B 69F0            ADC     #256-16  ;BY ADDING F0 WE ACTUALLY
                                      ; SUBTRACT 10, RIGHT?
031D A8              TAY              ;PUT THE INDEX BACK
031E 29F0            AND     #0F0H    ;WE ARE FINISHED IF THE ACCUMULATOR
                                      ; HAS F0 IN IT
0320 C9F0            CMP     #0F0H    ;THAT'S IT
0322 D0DF            BNE     COUNT1   ;GOTO PULL NEXT FROM STACK
0324 8A      COUNT:  TXA              ;LET'S LOOK AT THAT LAMP COUNT
0325 F003            BEQ     GO
0327 4C96F2          JMP     LOOP1 + 0F000H  ;NEXT LAMP

032A 4C89F2  GO:     JMP     AGAIN + 0F000H  ;LOAD HER UP
                                     ; AND START OVER AGAIN
```

```
0320 5145432053          .DFB    " IFS SYSTEMS   (C) 1990 - R. E. TRELEVEN "
0355 00                  .DFB    0

0356                     PROC    IRQ_ORG
                   ;**********************************************
                   ;********************** IRQ *******************
                   ;**********************************************

                   ;INTERRUPT REQUEST ROUTINE FOR GREATER BUFFALO


0400                     ORG     BASE + 0040CH

                   ;BETTER SAVE EVERYTHING
0400 48                  PHA                    ;PUSH ACCUMULATOR
0401 8A                  TXA                    ;GET X REG
0402 48                  PHA                    ;PUSH X
0403 98                  TYA                    ;GET Y REG
0404 48                  PHA                    ;PUSH Y

                   ;THE ONLY THING THAT CAN CAUSE AN INTERRUPT IS
                   ; UART RECEIVE
0405 AD8503              LDA     0385H          ;GET BIT MIRROR
0408 4920                EOR     #20H           ;INVERT IRQ BIT
040A 8D8503              STA     0385H          ;SAVE MIRROR
040D 8D0598              STA     9805H          ;SAVE OUTPUT
0410 2C0098              BIT     9800H          ;TEST THE RX STATUS (OVERFLOW)
0413 5054                BVC     NXTIRQ         ;NEXT INTERUPT IF NOT THIS ONE
0415 AD0098              LDA     9800H          ;GET STATUS
0418 AE8403              LDX     0384H          ;GET CURRENT LAMP INTO X REG.
041B 2938                AND     #38H           ;MASK FOR ERROR BITS
041D F004                BEQ     LETTER         ;JUMP IF OK
041F 78                  SEI                    ;SHOULD BE SET BUT JUST IN CASE
0420 4C00F2              JMP     0F200H         ;START THE WHOLE THING OVER
0423 AD0198     LETTER:  LDA     9801H          ;GET THE UART RX DATA
0426 297F                AND     #7FH           ;MASK FOR 7 BITS
0428 C941                CMP     #"A"           ;CALCULATE CHAR-"A"
042A 300F                BMI     NUMBER         ;LESS THAN "A"
042C C951                CMP     #"Q"           ;CALCULATE CHAR-"Q"  HIGHEST
                                                ; IT CAN BE IS "P"
042E 1028                BPL     CHEK_R         ;CHARCTER IS OUT OF RANGE IF PLUS
0430 69BF                ADC     #256-"A"       ;ADDING BF IS LIKE
                                                ; SUBTRACTING 41H (65)
                   ;ACCUMULATOR NOW HOLDS THE NUMBER 0 TO F
0432 0A                  ASL     A
0433 0A                  ASL     A
0434 0A                  ASL     A              ;ACCUMULATOR NOW HOLDS LAMP NUMBER
                                                ; (MULTIPLE OF 8)
0435 8D8403              STA     0384H          ;NEW LAMP NUMBER
0438 18                  CLC                    ;BETTER CLEAR IT JUST IN CASE
0439 902E                BCC     NXTIRQ         ;CARRY BETTER BE CLEAR!!
043B C930       NUMBER:  CMP     #"0"           ;CALCULATE CHAR-"0"
043D 3013                BMI     PLUS           ;BRANCH IF NOT A NUMBER
```

```
043F C940                CMP     #'@'      ;CALCULATE CHAR-'@'
0441 1026                BPL     NXTIRQ    ;CHARACTER IS '@', IT CAN'T BE
                                           ; A NUMBER, EITHER
0443 69D0                ADC     #0C0H     ;ADDING C0 IS LIKE SUBTRACTING
                                           ; 40H (64)
                 ;ACCUMULATOR NOW HOLDS THE POWER LEVEL
0445 9D0002              STA     0200H,X   ;SAVE SETPOINT OF CURRENT LAMP
0448 E8          NEXT:   INX               ;NEXT LAMP
0449 8A          CHECK:  TXA               ;MOVE TO ACCUMULATOR
044A 297F                AND     #7FH      ;THIS WILL FORCE A ROLLOVER
                                           ; AT 80 TO 00
044C 8D8403              STA     0384H     ;SAVE CURRENT LAMP
044F 18                  CLC
0450 9017                BCC     NXTIRQ    ;BETTER BE PLUS
0452 C92B        PLUS:   CMP     #'+'      ;CHECK FOR "+"
0454 F0F2                BEQ     NEXT      ;JUST INCREMENT
0456 CA                  DEX               ;WE'LL DO THIS JUST IN CASE
0457 C92D                CMP     #'-'      ;CHECK FOR "-"
0459 F0EE                BEQ     CHECK     ;DON'T INCREMENT, JUST CHECK
                                           ; FOR ROLL OVER IF "-"
045B C952        CHEK_R: CMP     #'R'      ;CHECK FOR "R" OR RESET
045D D00A                BNE     NXTIRQ    ;THAT SHOULD DO IT
045F A900                LDA     #00H      ;PREPARE TO ZERO SET POINTS
0461 A27F                LDX     #07FH     ;LAMP # 127
0463 9D0002      CHK_R1: STA     0200H,X   ;ZERO SET POINT
0466 CA                  DEX               ;NEXT LAMP
0467 10FA                BPL     CHK_R1    ;LAST LAMP?
0469 EA          NXTIRQ: NOP               ;
046A EA                  NOP               ;
                         ;THAT SHOULD DO IT
046B 68          DONE:   PLA               ;GET Y FROM STACK
046C A8                  TAY               ;RESTORE Y
046D 68                  PLA               ;GET X
046E AA                  TAX               ;RESTORE X
046F 68                  PLA               ;GET ACCUMULATOR
0470 58                  CLI               ;READY FOR NEXT TIME
0471 40                  RTI               ;WE'RE OUTTA HERE

0472 5445432053          DFB     "TEC SYSTEMS - 05/16/89 - R. E. TRELEVEN "
049A 00                  DFB     0

049B                     INCL    "NMI.GBP"
                 ;***********************************************************
                 ;*************************** NMI ****************************
                 ;***********************************************************


                 ;NON-MASKABLE INTERRUPT ROUTINE FOR GREATER BUFFALO


0600                     ORG     BASE + 00600H
                 ;BETTER SAVE EVERYTHING
0600 48                  PHA               ;PUSH ACCUMULATOR
```

```
0601 8A            TXA              ;GET X REG
0602 48            PHA              ;PUSH X
0603 98            TYA              ;GET Y REG
0604 48            PHA              ;PUSH Y
                  ;BETTER CHECK TO SEE IF WE CAN PROCEED
0605 A900          LDA     #00H
0607 CD8003        CMP     0380H    ;IS THIS BYTE 00
060A D06B          BNE     EULH     ;ALL DONE IF NOT EQUAL
060C A955          LDA     #55H
060E CD8103        CMP     0381H    ;IS THIS BYTE 55
0611 D064          BNE     EULH     ;WE DONE
0613 A9AA          LDA     #0AAH
0615 CD8203        CMP     0382H    ;IS THIS BYTE AA
0618 D05D          BNE     EULH     ;IF EQUAL TO ZERO AT
                                    ; THIS POINT, WE MUST BE OK!
061A AD8303        LDA     0383H    ;GET CURRENT LAMP PHASE
061D 290F          AND     #0FH     ;MASK FOR LOW ORDER NIBBLE
061F 0A            ASL     A
0620 0A            ASL     A
0621 0A            ASL     A
0622 0A            ASL     A        ;COUNT IS NOW IN HIGH ORDER NIBBLE
0623 AA            TAX              ;HOLD COUNT IN X REG FOR INDEXING
                  ;EACH PORT IS DONE SEPARATELY TO ENABLE PORTS
                  ; TO BE ANYWHERE IN MEMORY
                  ;THEY DON'T HAVE TO BE SEQUENTIAL... MEMORY'S CHEAP
0624 B50F          LDA     15,X     ;GET PORT F PATTERN
0626 8D0698        STA     9806H    ;STORE IN PORT F...
                                    ;JUST A DUMMY FOR NOW
0629 B50E          LDA     14,X     ;GET PORT E PATTERN
062B 8D0698        STA     9806H    ;STORE IN PORT E
062E B50D          LDA     13,X     ;GET PORT D PATTERN
0630 8D0698        STA     9806H    ;STORE IN PORT D
0633 B50C          LDA     12,X     ;GET PORT C PATTERN
0635 8D0698        STA     9806H    ;STORE IN PORT C
0638 B50B          LDA     11,X     ;GET PORT B PATTERN
063A 8D0698        STA     9806H    ;STORE IN PORT B
063D B50A          LDA     10,X     ;GET PORT A PATTERN
063F 8D0698        STA     9806H    ;STORE IN PORT A
0642 B509          LDA     9,X      ;GET PORT 9 PATTERN
0644 8D0698        STA     9806H    ;STORE IN PORT 9
0647 B508          LDA     8,X      ;GET PORT 8 PATTERN
0649 8D0698        STA     9806H    ;STORE IN PORT 8
064C B507          LDA     7,X      ;GET PORT 7 PATTERN
064E 8D0698        STA     9806H    ;STORE IN PORT 7
0651 B506          LDA     6,X      ;GET PORT 6 PATTERN
0653 8D0698        STA     9806H    ;STORE IN PORT 6
0656 B505          LDA     5,X      ;GET PORT 5 PATTERN
0658 8D0698        STA     9806H    ;STORE IN PORT 5
065B B504          LDA     4,X      ;GET PORT 4 PATTERN
065D 8D0698        STA     9806H    ;STORE IN PORT 4
0660 B503          LDA     3,X      ;GET PORT 3 PATTERN
0662 8D0698        STA     9806H    ;STORE IN PORT 3
0665 B502          LDA     2,X      ;GET PORT 2 PATTERN
0667 8D0698        STA     9806H    ;STORE IN PORT 2
066A B501          LDA     1,X      ;GET PORT 1 PATTERN
```

```
ALL.LST                                                                  Page 11

 066C 8D0693          STA     0906H     ;STORE IN PORT 1..
                                        ; STILL A DUMMY
 066F B500            LDA     #.?       ;GET 1ST ? PATTERN
 0671 8D0493          STA     9304H     ;STORE IN PORT 0..
                                        ; THIS IS A REAL ADDRESS
                ;THIS IS THE HALFWAY POINT FOR ENDH
 0674 18              CLC
 0675 9003            BCC     ???
 0677 18        ENDH: CLC
 0678 901F            BCC     ???       ;FROM HERE WE CAN BRANCH
                ;NOW WE WILL INCREMENT AND CHECK FOR TIME TO SET FLAGS
 067A EE8303    ???:  INC     0383H
 067D 101A            BPL     END       ;IF STILL PLUS, DON'T DO ANYTHING
 067F AD8503          LDA     0385H     ;GET MIRROR
 0682 4910            EOR     #10H      ;INVERT ONE BIT
 0684 8D8503          STA     0385H     ;SAVE MIRROR
 0687 8D0598          STA     9805H     ;SAVE OUTPUT
 068A A900            LDA     #00H
 068C 8D8303          STA     0383H     ;FRESH START FOR PHASE COUNTER
                ;NOW WE HAVE TO SET ALL THE INCREMENT FLAGS
 068F A27F            LDX     #7FH      ;START WITH LAMP 127
 0691 A9FF            LDA     #0FFH
 0693 9D0003    LOOPH: STA    0300H,X   ;SET FLAG
 0696 CA              DEX               ;NEXT FLAG
 0697 10FA            BPL     LOOPH     ;STOP WHEN X REG IS FF
                ;THAT SHOULD DO IT
 0699 68        END:  PLA               ;GET Y FROM STACK
 069A A8              TAY               ;RESTORE Y
 069B 68              PLA               ;GET X
 069C AA              TAX               ;RESTORE X
 069D 68              PLA               ;GET ACCUMULATOR
 069E 58              CLI               ;CLEAR INTERRUPT BIT
 069F 40              RTI               ;WE'RE OUTTA HERE

 06A0 5445432053      DFB     "TEC SYSTEMS - 05/16/89 - R. E. TRELEVEN "
 06C8 00              DFB     0


 0FFA                 ORG     BASE + 0FFAH ;GET READY TO SET UP VECTORS


 0FFA 00F6            DFB     LOW(NMIVEC),HIGH(NMIVEC)
 0FFC 00F2            DFB     LOW(RESVEC),HIGH(RESVEC)
 0FFE 00F4            DFB     LOW(IRQVEC),HIGH(IRQVEC)


                      END
```

ALL.LST [illegible] Page 12

| | | | | | |
|---|---|---|---|---|---|
| 0289 | AGAIN | 0000 | BASE | 0113 | CHECK |
| 0458 | CHEK_R | 0163 | CHK_R1 | 0321 | COUNT |
| 0303 | COUNT1 | 0168 | [illegible] | [illegible] | END |
| 0677 | ENDH | 0256 | [illegible] | [illegible] | GO |
| 021A | INDEX | F100 | [illegible] | [illegible] | LETTER |
| 025E | LEVELS | 0280 | [illegible] | 0296 | LOOPH |
| 0200 | LOOPH1 | 0693 | [illegible] | 021F | MIRROR |
| 0449 | NEXT | 0279 | [illegible] | F600 | NMIVEC |
| 0138 | NUMBER | 0169 | [illegible] | [illegible] | O |
| 020F | OFF | 02A2 | [illegible] | 0152 | PLUS |
| 02F0 | POWER | 02DB | [illegible] | 021C | RESET |
| F200 | RESVEC | 0200 | [illegible] | 02E8 | UPDATE |
| 00FF | X | 067A | [illegible] | | |

MEMORY GPP Page 1

| Address | | | | |
|---|---|---|---|---|
| FFFF | F4 | 00 | FFFE | IRQ |
| FFFD | F2 | 00 | FFFC | Reset |
| FFFB | F6 | 00 | FFFA | NMI |
| F800 | FF | FF | FFF9 | NOT USED |

| Address | | |
|---|---|---|
| F600 | NMI HANDLER | F7FF |
| F400 | IRQ HANDLER | F5FF |
| F200 | MAIN PROGRAM | F3FF |

| Address | | | | | | | | | | | | | | | | | End | |
|---|---|---|---|---|---|---|---|---|---|---|---|---|---|---|---|---|---|---|
| F1F0 | FF | FF | FF | FF | FF | FF | FF | FF | FF | FF | FF | FF | FF | FF | FF | 00 | F1FF | |
| F1E0 | FF | FF | FF | FF | FF | FF | FF | 00 | FF | FF | FF | FF | FF | FF | FF | 00 | F1EF | |
| F1D0 | FF | FF | FF | FF | FF | 00 | FF | FF | FF | FF | 00 | FF | FF | FF | FF | 00 | F1DF | |
| F1C0 | FF | FF | FF | 00 | FF | FF | FF | 00 | FF | FF | FF | 00 | FF | FF | FF | 00 | F1CF | |
| F1B0 | FF | FF | FF | 00 | FF | FF | 00 | FF | FF | 00 | FF | FF | 00 | FF | FF | 00 | F1BF | |
| F1A0 | FF | FF | 00 | FF | 00 | FF | FF | 00 | FF | FF | 00 | FF | 00 | FF | FF | 00 | F1AF | |
| F190 | FF | FF | 00 | FF | 00 | FF | 00 | FF | FF | 00 | FF | 00 | FF | 00 | FF | 00 | F19F | |
| F180 | 00 | FF | 00 | FF | 00 | FF | 00 | FF | 00 | FF | 00 | FF | 00 | FF | 00 | FF | F18F | 16 x 16 |
| F170 | 00 | 00 | FF | 00 | FF | 00 | FF | 00 | 00 | FF | 00 | FF | 00 | FF | 00 | FF | F17F | POWER |
| F160 | 00 | 00 | FF | 00 | FF | 00 | 00 | FF | 00 | 00 | FF | 00 | FF | 00 | 00 | FF | F16F | LEVEL |
| F150 | 00 | 00 | 00 | FF | 00 | 00 | FF | 00 | 00 | FF | 00 | 00 | FF | 00 | 00 | FF | F15F | BIT MAP |
| F140 | 00 | 00 | 00 | FF | 00 | 00 | 00 | FF | 00 | 00 | 00 | FF | 00 | 00 | 00 | FF | F14F | |
| F130 | 00 | 00 | 00 | 00 | 00 | FF | 00 | 00 | 00 | 00 | FF | 00 | 00 | 00 | 00 | FF | F13F | |
| F120 | 00 | 00 | 00 | 00 | 00 | 00 | 00 | FF | 00 | 00 | 00 | 00 | 00 | 00 | 00 | FF | F12F | |
| F110 | 00 | 00 | 00 | 00 | 00 | 00 | 00 | 00 | 00 | 00 | 00 | 00 | 00 | 00 | 00 | FF | F11F | |
| F100 | 00 | 00 | 00 | 00 | 00 | 00 | 00 | 00 | 00 | 00 | 00 | 00 | 00 | 00 | 00 | 00 | F10F | |
| F0F0 | 00 | 00 | 00 | 00 | 00 | 00 | 00 | 00 | 00 | 00 | 00 | 00 | 00 | 00 | 00 | 00 | F0FF | |
| F0E0 | 00 | 00 | 00 | 00 | 00 | 00 | 00 | 00 | 00 | 00 | 00 | 00 | 00 | 00 | 00 | 00 | F0EF | |
| F0D0 | 00 | 00 | 00 | 00 | 00 | 00 | 00 | 00 | 00 | 00 | 00 | 00 | 00 | 00 | 00 | 00 | F0DF | |
| F0C0 | 00 | 00 | 00 | 00 | 00 | 00 | 00 | 00 | 00 | 00 | 00 | 00 | 00 | 00 | 00 | 00 | F0CF | 128 BYTE |
| F0B0 | 00 | 00 | 00 | 00 | 00 | 00 | 00 | 00 | 00 | 00 | 00 | 00 | 00 | 00 | 00 | 00 | F0BF | LAMP BIT |
| F0A0 | 00 | 00 | 00 | 00 | 00 | 00 | 00 | 00 | 00 | 00 | 00 | 00 | 00 | 00 | 00 | 00 | F0AF | MASK |
| F090 | 00 | 00 | 00 | 00 | 00 | 00 | 00 | 00 | 00 | 00 | 00 | 00 | 00 | 00 | 00 | 00 | F09F | |
| F080 | 01 | 02 | 04 | 08 | 00 | 10 | 20 | 40 | 80 | 00 | 00 | 00 | 00 | 00 | 00 | 00 | F08F | |
| F070 | 00 | 00 | 00 | 00 | 00 | 00 | 00 | 00 | 00 | 00 | 00 | 00 | 00 | 00 | 00 | 00 | F07F | |
| F060 | 00 | 00 | 00 | 00 | 00 | 00 | 00 | 00 | 00 | 00 | 00 | 00 | 00 | 00 | 00 | 00 | F06F | |
| F050 | 00 | 00 | 00 | 00 | 00 | 00 | 00 | 00 | 00 | 00 | 00 | 00 | 00 | 00 | 00 | 00 | F05F | |
| F040 | 00 | 00 | 00 | 00 | 00 | 00 | 00 | 00 | 00 | 00 | 00 | 00 | 00 | 00 | 00 | 00 | F04F | 128 BYTE |
| F030 | 00 | 00 | 00 | 00 | 00 | 00 | 00 | 00 | 00 | 00 | 00 | 00 | 00 | 00 | 00 | 00 | F03F | LAMP PORT |
| F020 | 00 | 00 | 00 | 00 | 00 | 00 | 00 | 00 | 00 | 00 | 00 | 00 | 00 | 00 | 00 | 00 | F02F | NUMBER |
| F010 | 00 | 00 | 00 | 00 | 00 | 00 | 00 | 00 | 00 | 00 | 00 | 00 | 00 | 00 | 00 | 00 | F01F | |
| F000 | 00 | 00 | 00 | 00 | 00 | 00 | 00 | 00 | 00 | 00 | 00 | 00 | 00 | 00 | 00 | 00 | F00F | |

9808 | EFFF NOT USED

| Address | READ | WRITE |
|---|---|---|
| 9807 | | |
| 9806 | | |
| 9805 | | STATUS FLAGS - (NOTE 3) |
| 9804 | | LAMP PORT 0 - TS2 |

15

MEMORY.GBF Monday, July 17, [illegible] Page 2

| Address | Contents | | End address | Remarks |
|---|---|---|---|---|
| 9803 | | | | |
| 9802 | | | | |
| 9801 | RX DATA & RESET | CTRL LOAD (NOTE 1) | | |
| 9800 | UART STATUS (NOTE 2) | TX LOAD | | |
| 0400 | NOT USED | | 97FF | |
| 0381 | UNUSED RAM | | 03FF | |
| 0386 | | | | |
| 0385 | TROUBLE BIT MIRROR (9805) | | | |
| 0384 | CURRENT LAMP COUNTER | | | |
| 0383 | LAMP PHASE COUNTER | | | |
| 0380 | FF FF FF or 00 55 AA | | 0382 | NMI CHECK |
| 0300 | INCREMENT FLAGS | | 037F | |
| 0280 | OUTPUT LEVELS | | 02FF | |
| 0200 | SET POINTS | | 027F | |
| 0100 | STACK | | 01FF | |
| 00F0 | 16 PORTS - COUNT "F" | | 00FF | |
| 00E0 | 16 PORTS - COUNT "E" | | 00EF | |
| 00D0 | 16 PORTS - COUNT "D" | | 00DF | |
| 00C0 | 16 PORTS - COUNT "C" | | 00CF | |
| 00B0 | 16 PORTS - COUNT "B" | | 00BF | |
| 00A0 | 16 PORTS - COUNT "A" | | 00AF | |
| 0090 | 16 PORTS - COUNT "9" | | 009F | PORT |
| 0080 | 16 PORTS - COUNT "8" | | 008F | MIRRORS |
| 0070 | 16 PORTS - COUNT "7" | | 007F | |
| 0060 | 16 PORTS - COUNT "6" | | 006F | |
| 0050 | 16 PORTS - COUNT "5" | | 005F | |
| 0040 | 16 PORTS - COUNT "4" | | 004F | |
| 0030 | 16 PORTS - COUNT "3" | | 003F | |
| 0020 | 16 PORTS - COUNT "2" | | 002F | |
| 0010 | 16 PORTS - COUNT "1" | | 001F | |
| 0000 | 16 PORTS - COUNT "0" | | 000F | |

| NOTES: | (1)CONTROL 9801 | (2)INPUTS 9800 | (3)OUTPUTS 9805 038 |
|---|---|---|---|
| D0 | 1 EVEN PARITY | [10% SPEED] | LAMP #1 CONTACTOR |
| D1 | 1 CHARACTER LENGTH 1 | [P.S.LAMP #1] | LAMP #2 CONTACTOR |
| D2 | 1 CHARACTER LENGTH 2 | [P.S.LAMP #2] | FAN STARTER |
| D3 | 1 STOP BIT SELECT | PARITY ERROR | NOT USED |
| D4 | 0 PARITY INHIBIT | FRAMING ERROR | NOT USED |
| D5 | NOT USED | OVERRUN ERROR | IRQ TOGGLE |
| D6 | NOT USED | DATA RECEIVED | NMI TOGGLE |
| D7 | NOT USED | TRANSMIT BUFFER EMPTY | RESET/TROUBLE |

```
10 OPEN "O",#1,
20 DIM D(4095)
30 A=65:R=82:Z=48:CR=13:LF=10:SP=32:NUL=128
40 REM ***** spaces ******
50 FOR N=0 TO 1535
60 D(N)=SP+NUL
70 NEXT N
80 REM ********* a or r *****
90 FOR N=1536 TO 2047
100 IF N AND 256 THEN D(N)=R+NUL:GOTO 120
110 D(N)=A
120 NEXT N
130 FOR N= 2048 TO 2559
140 IF N AND 256 THEN D(N)=R+NUL:GOTO 160
150 D(N)=(NOT N  AND 15)+Z
160 NEXT N
170 FOR N=2560 TO 3071
180 IF N AND 256 THEN D(N)=R:GOTO 200
190 D(N)=(NOT N AND 240)/16+Z
200 NEXT N
210 FOR N=3072 TO 3583
220 D(N)=CR
230 NEXT N
240 FOR N=3584 TO 4095
250 D(N)=LF
260 NEXT N
270 FOR N=0 TO 4095
280 PRINT#1,CHR$(D(N));
290 NEXT N
300 CLOSE #1
```

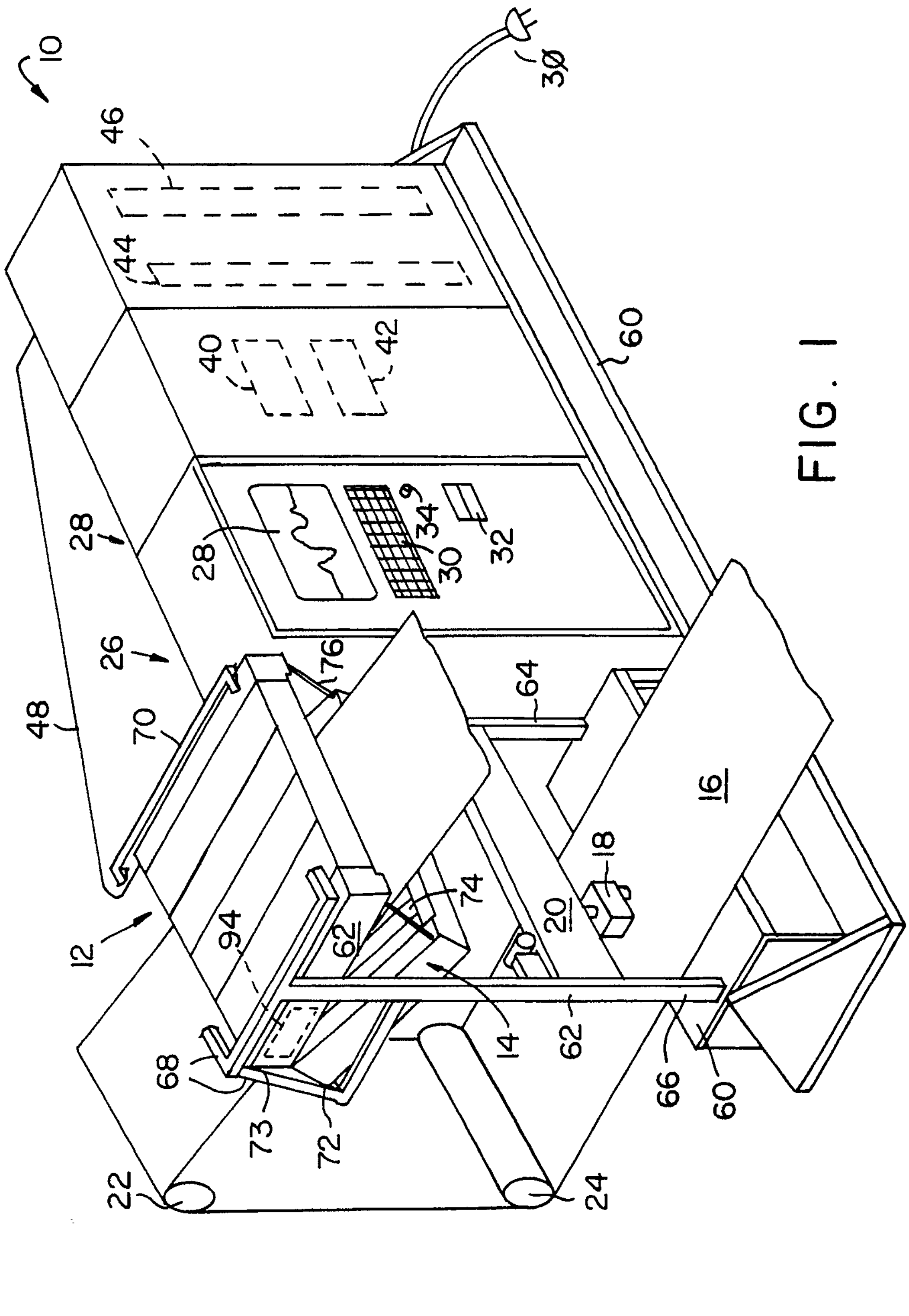
10
30
46
44
40
42
60
28
34
30
32
48
26
70
76
64
16
18
12
94
62
74
20
14
62
68
73
72
22
24
66
60

FIG. 1

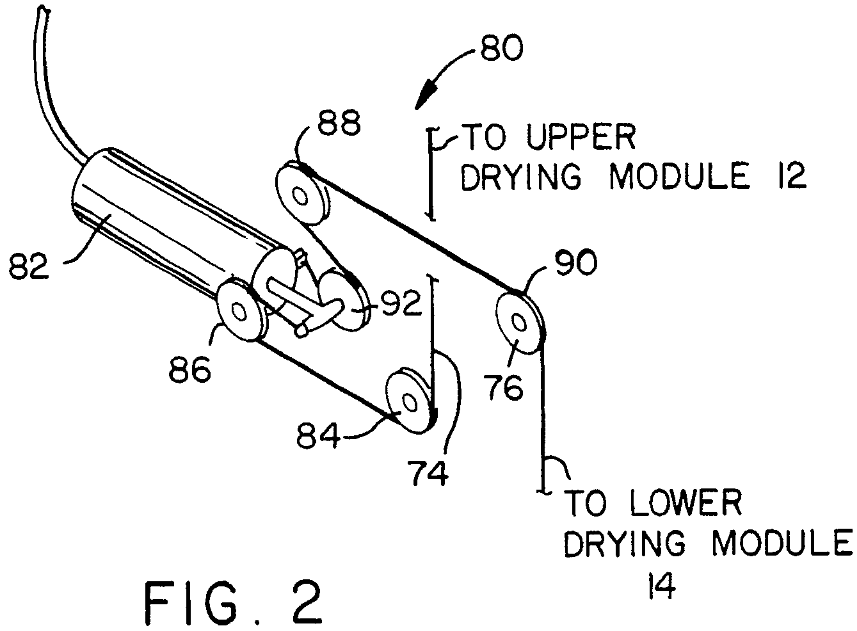
80
88
TO UPPER
DRYING MODULE 12
82
90
92
86
76
84
74
TO LOWER
DRYING MODULE
14

FIG. 2

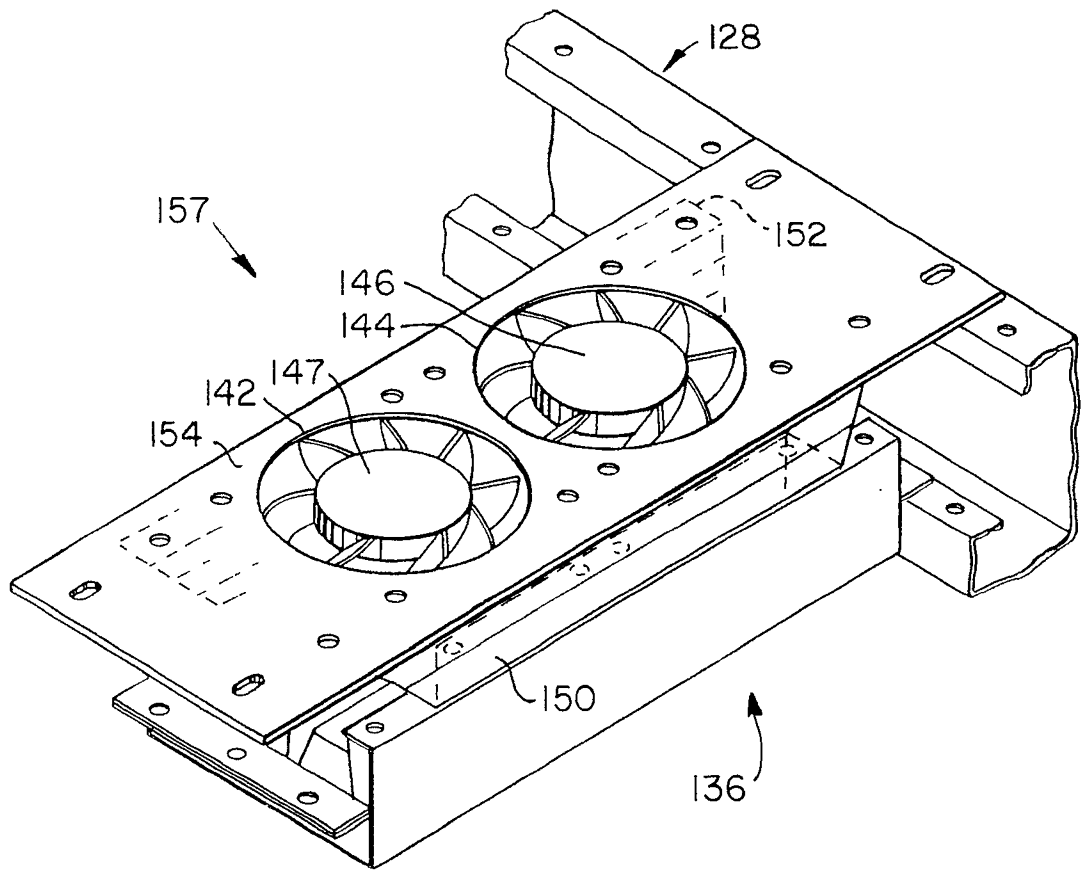
128
157
152
146
144
147
142
154
150
136

FIG. 6

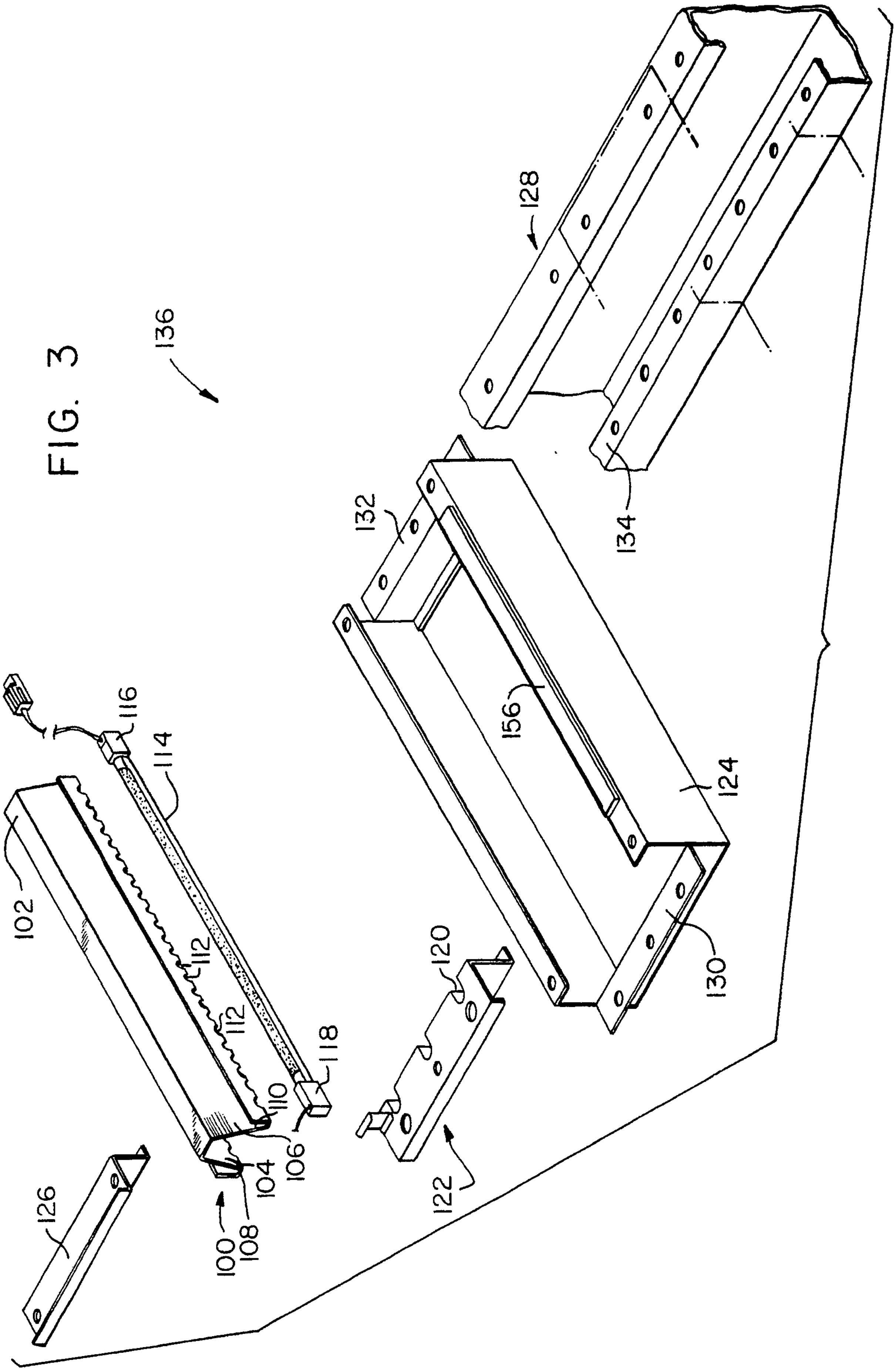
136
128
132
134
156
124
130
116
114
102
112
112
110
118
106
104
108
100
120
122
126

FIG. 3

FIG. 4

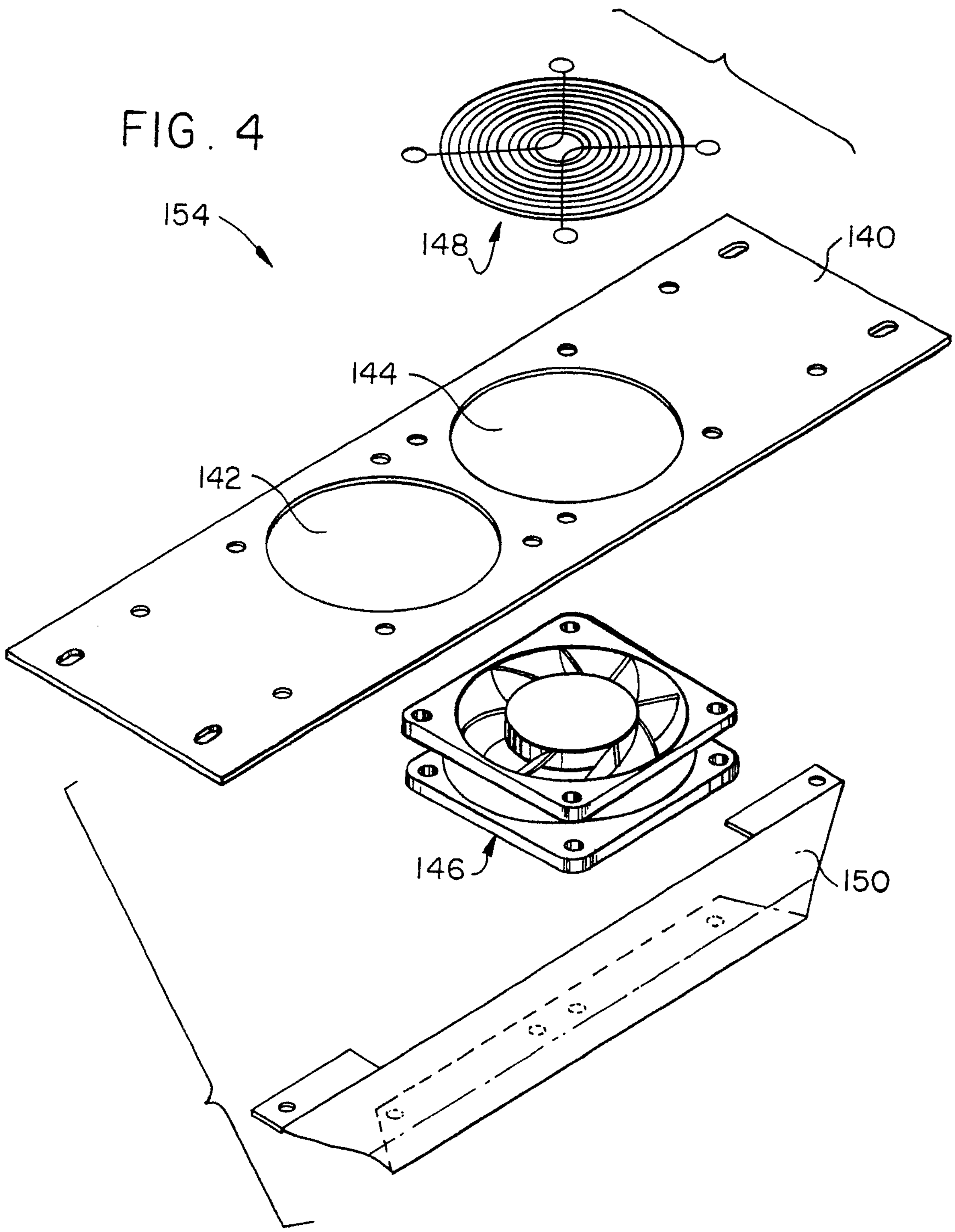

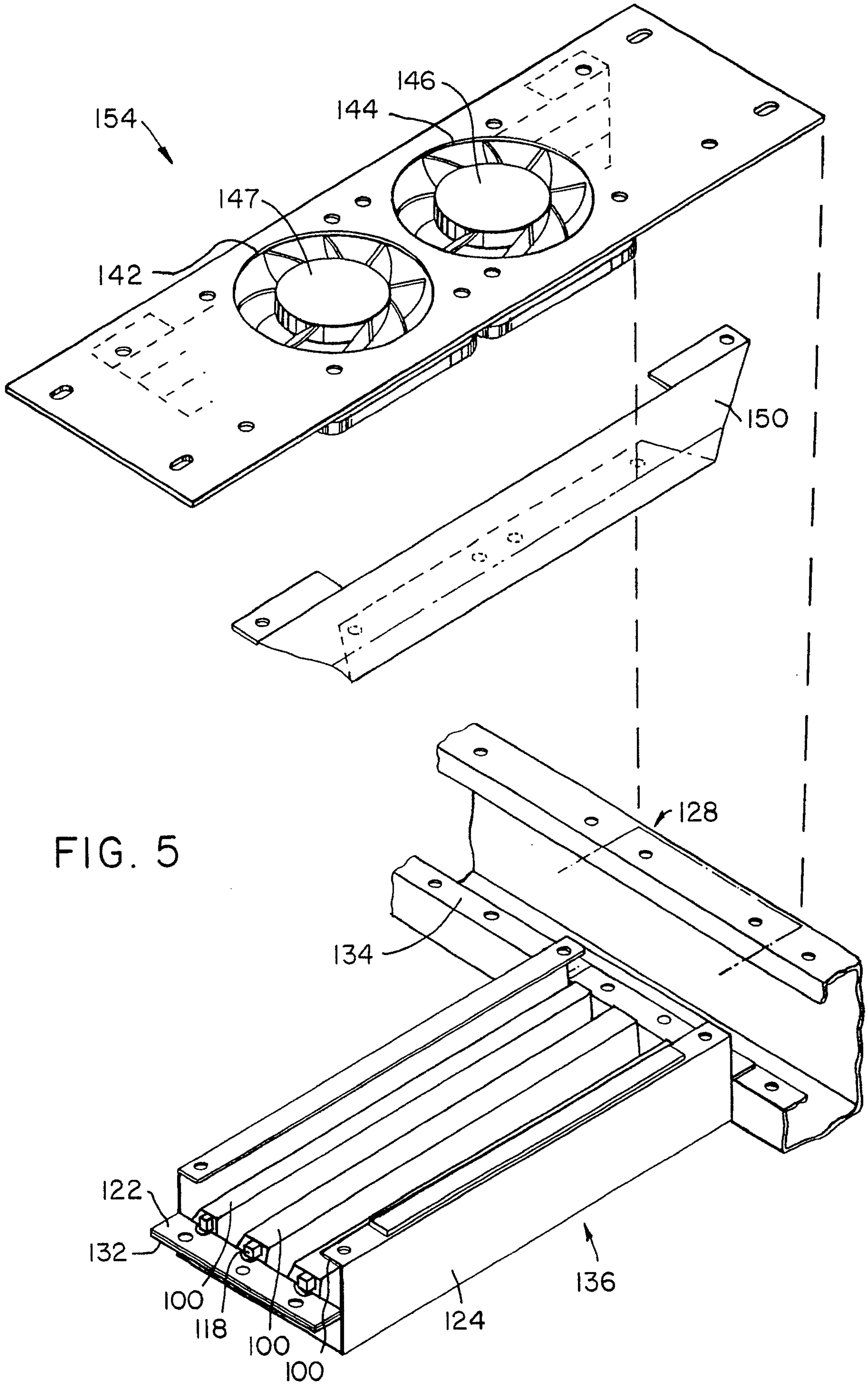


FIG. 5

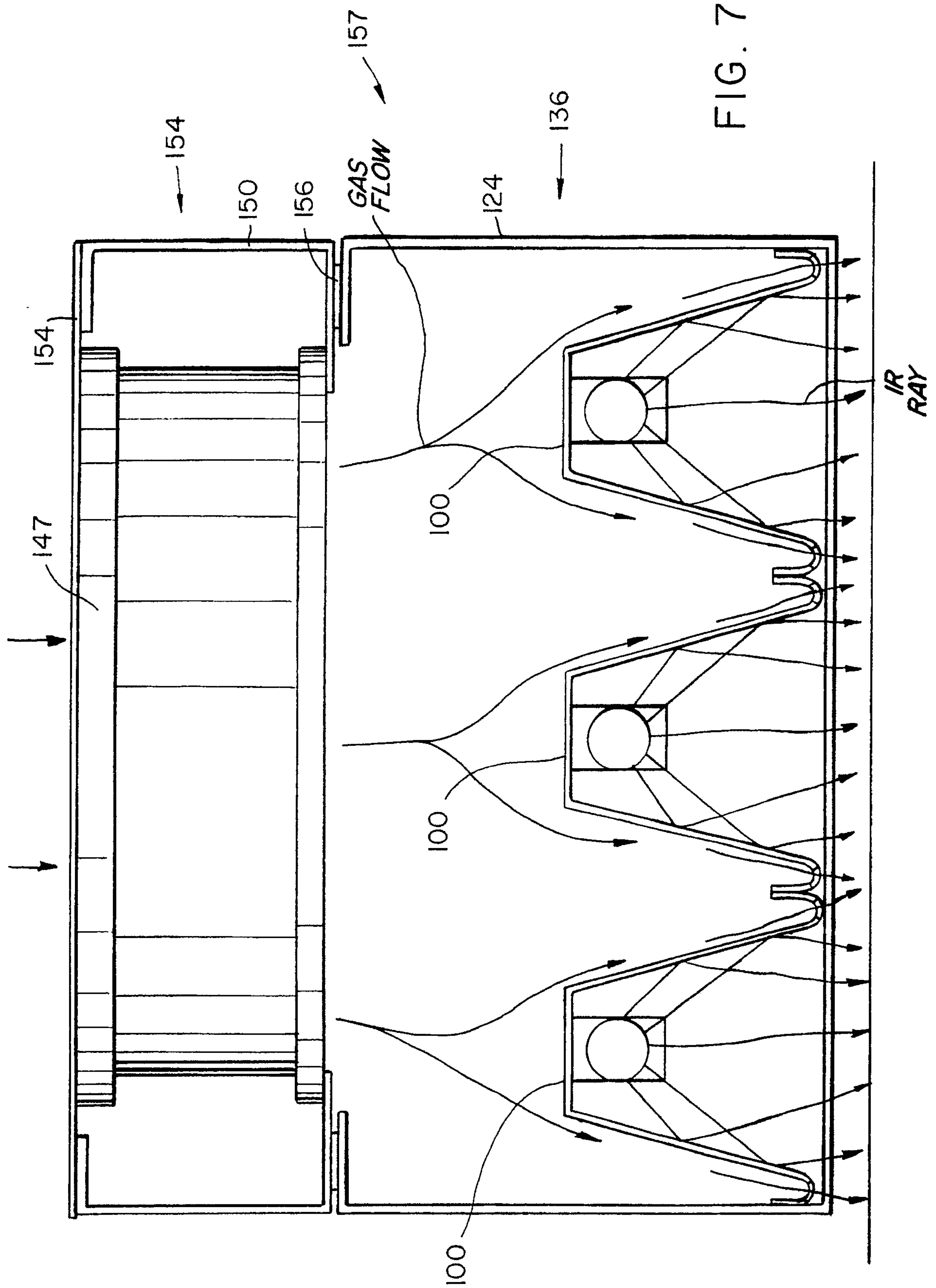


FIG. 7

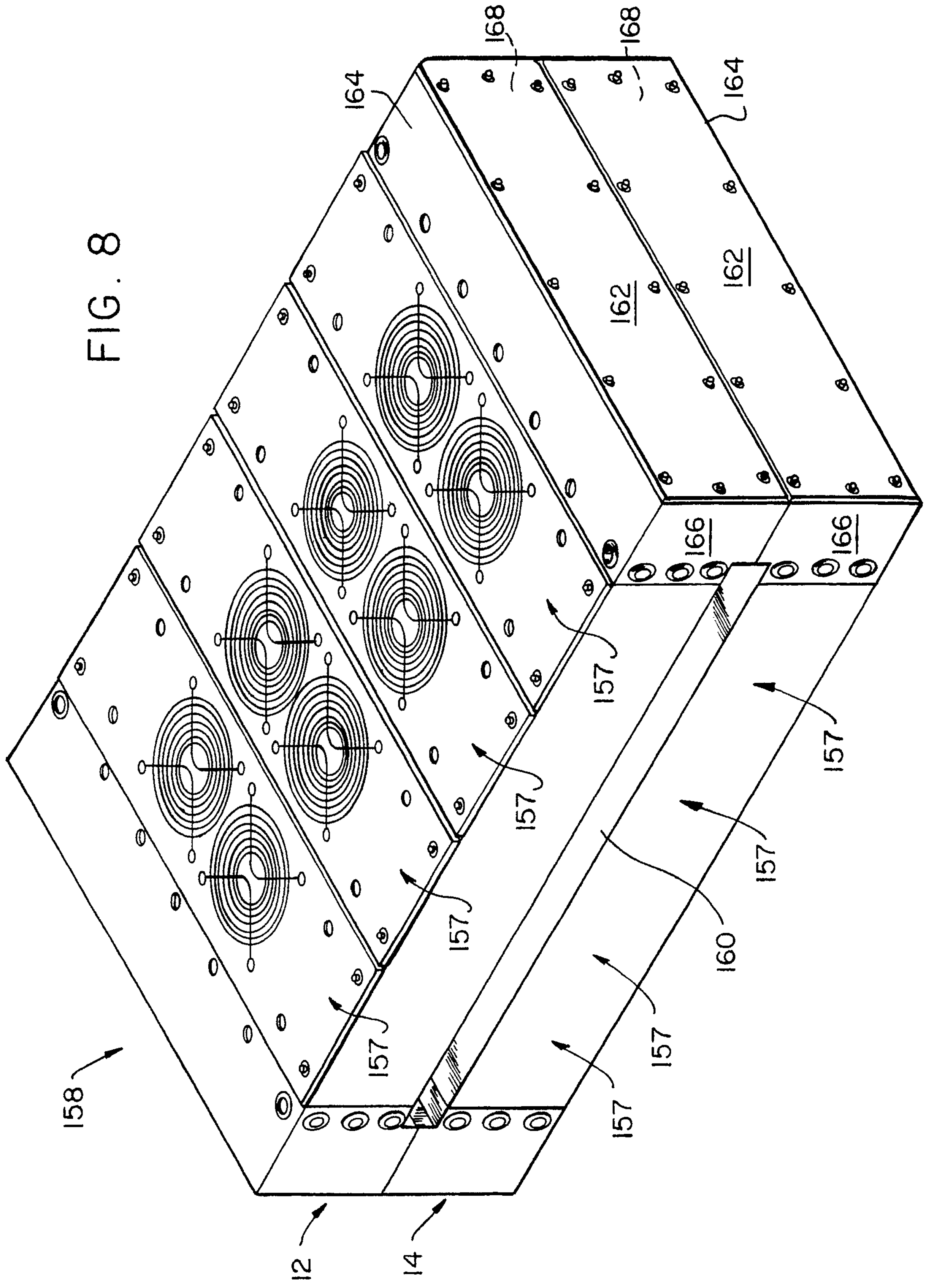
158
12
14
157
157
157
157
157
157
157
157
160
162
162
164
164
166
166
168
168

FIG. 8

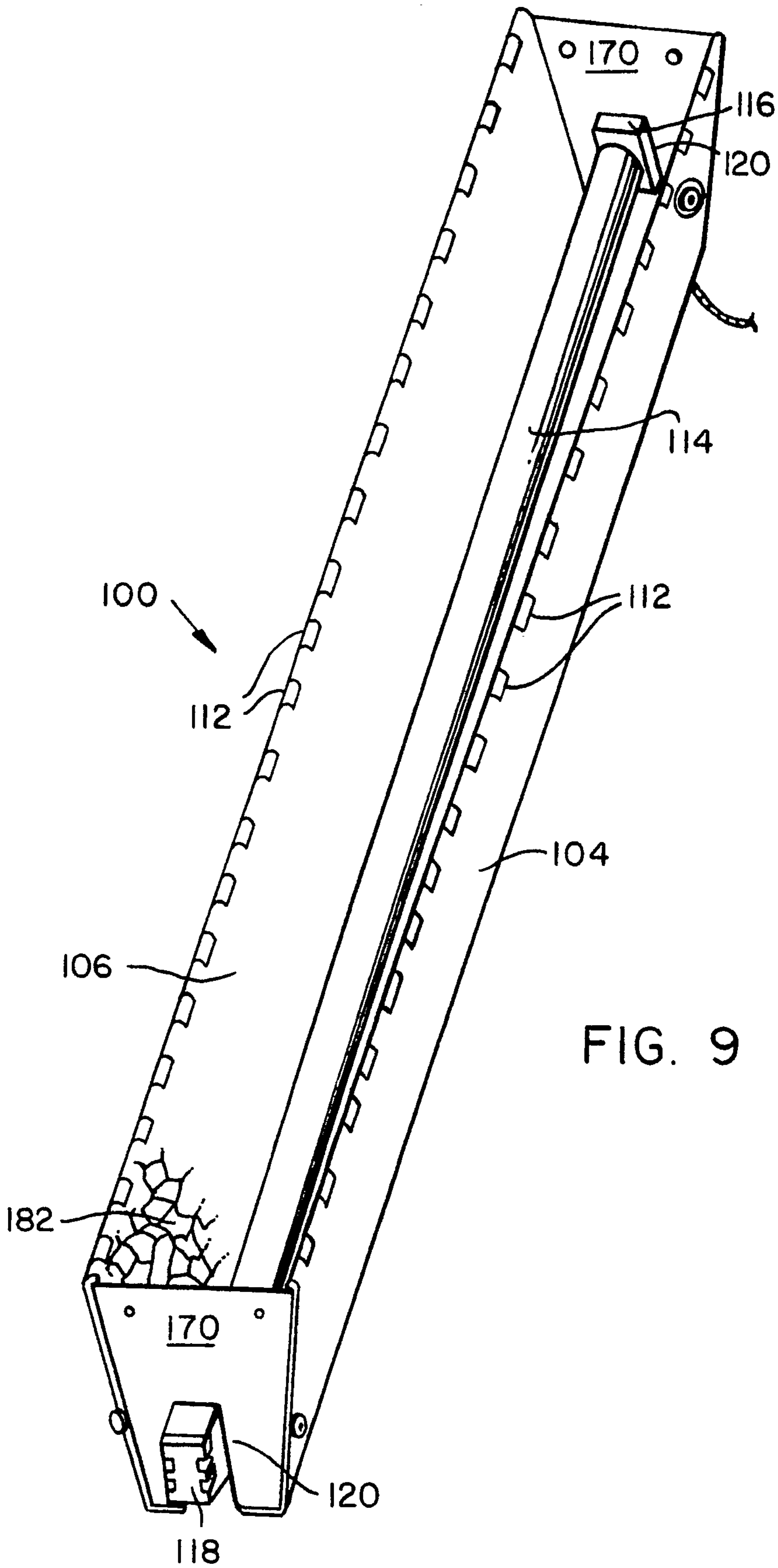


FIG. 9

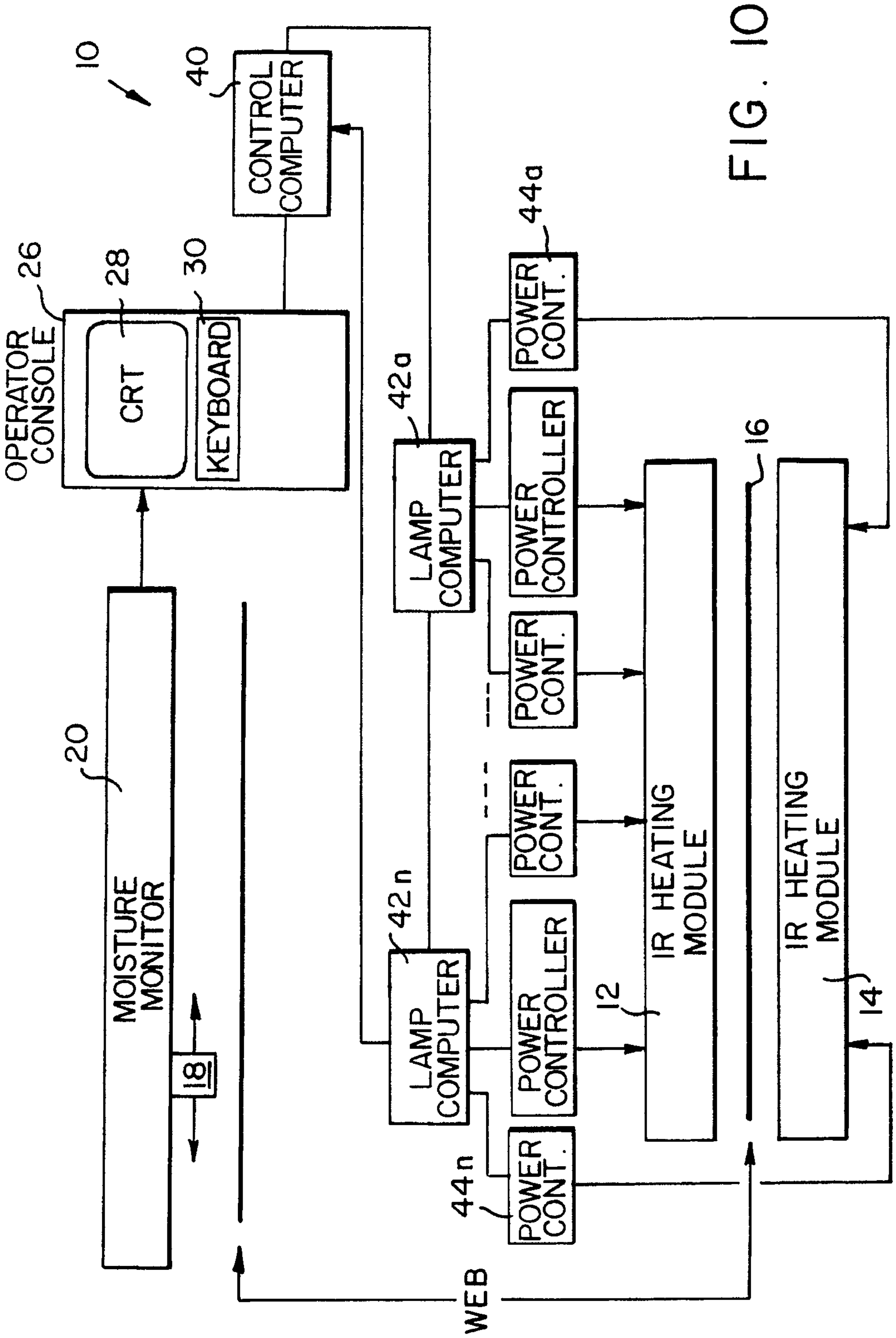
10
OPERATOR CONSOLE
26
CRT
28
KEYBOARD
30
CONTROL COMPUTER
40
MOISTURE MONITOR
20
18
LAMP COMPUTER
42a
LAMP COMPUTER
42n
POWER CONTROLLER
POWER CONT.
44a
44n
IR HEATING MODULE
12
IR HEATING MODULE
14
16
WEB

FIG. 10

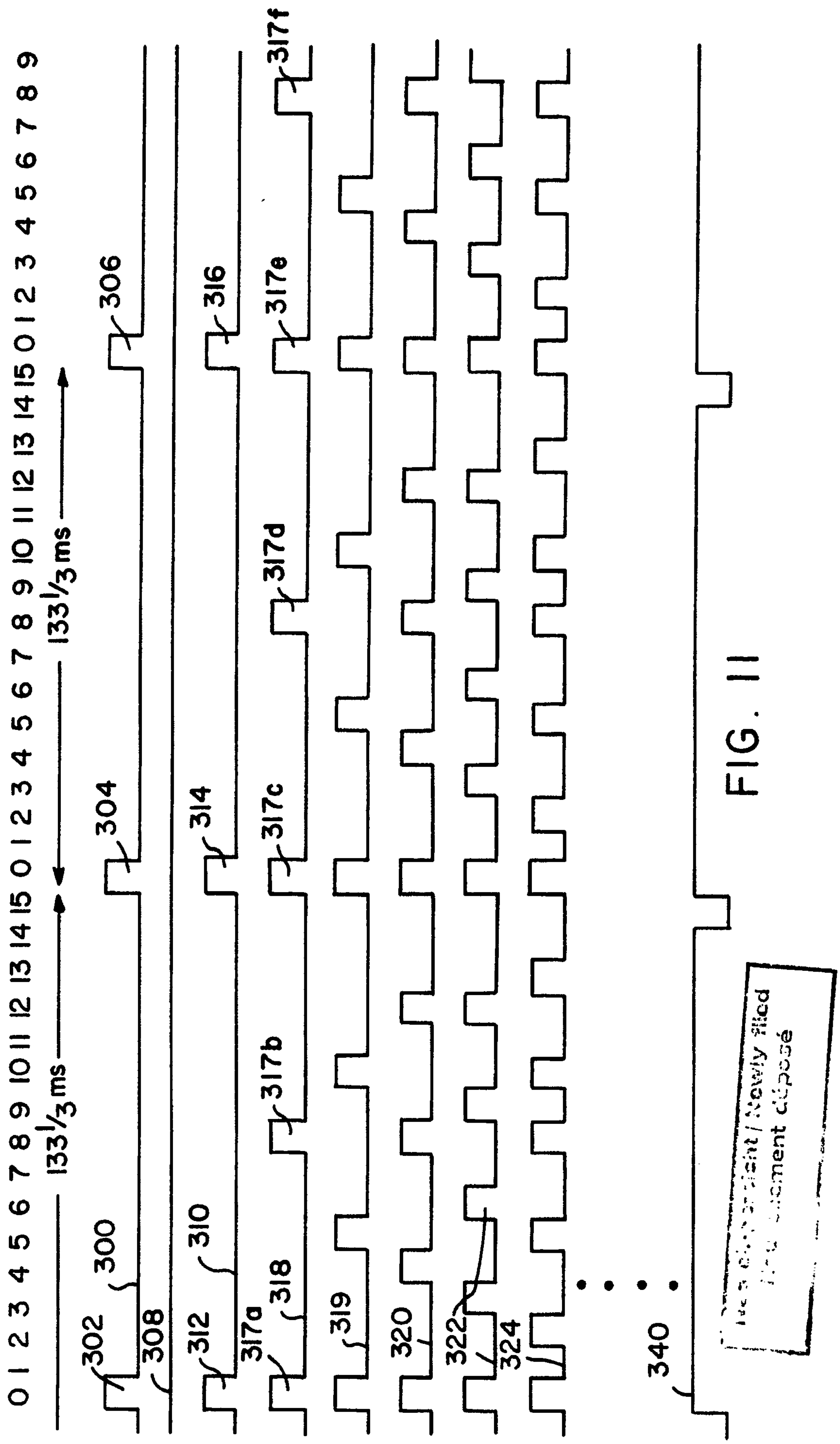
0 1 2 3 4 5 6 7 8 9 10 11 12 13 14 15 0 1 2 3 4 5 6 7 8 9 10 11 12 13 14 15 0 1 2 3 4 5 6 7 8 9
133 1/3 ms
133 1/3 ms
300
302
304
306
308
310
312
314
316
317a
317b
317c
317d
317e
317f
318
319
320
322
324
340

FIG. 11

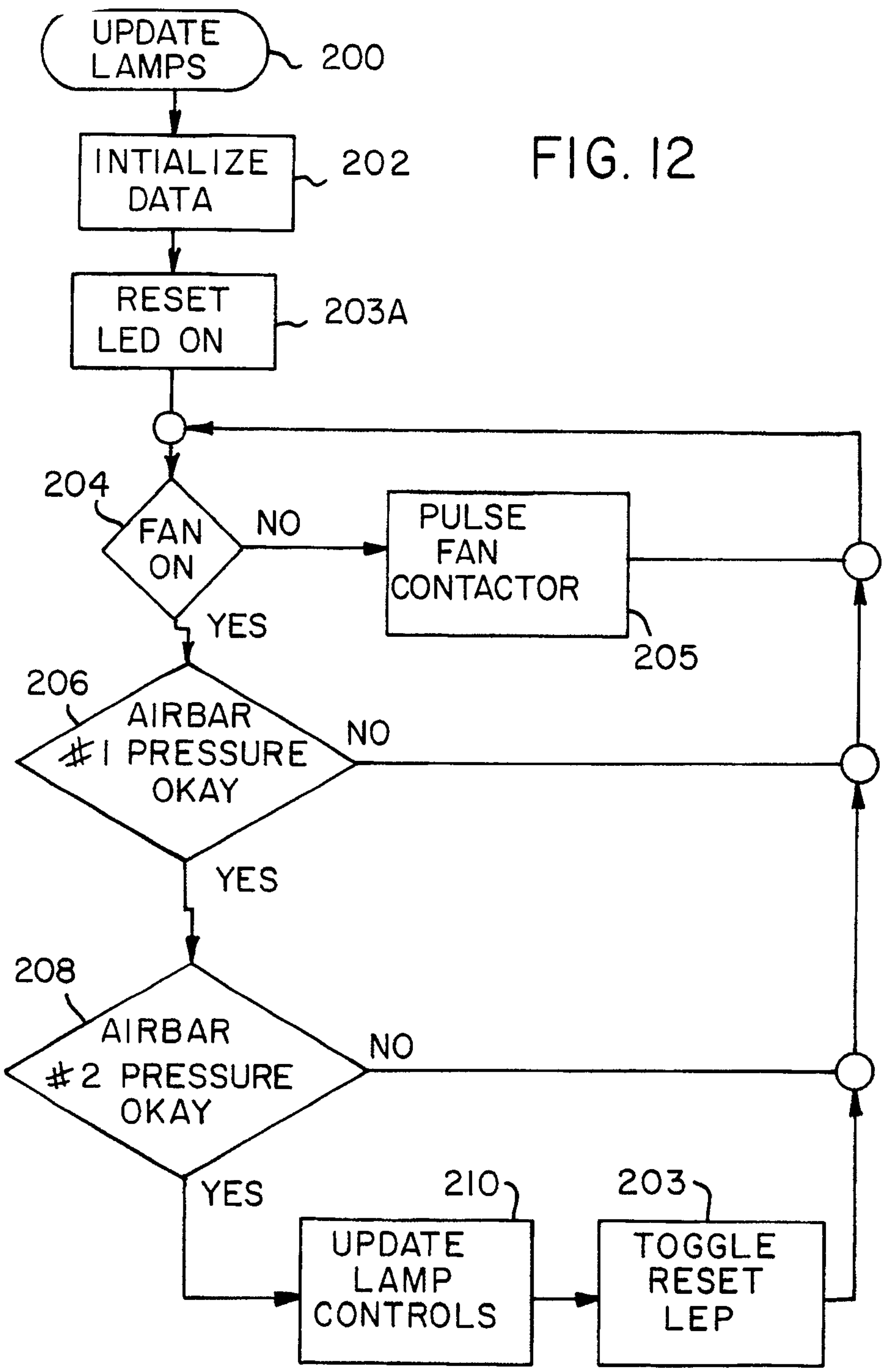
UPDATE LAMPS
200
INTIALIZE DATA
202
RESET LED ON
203A
204
FAN ON
NO
PULSE FAN CONTACTOR
205
YES
206
AIRBAR #1 PRESSURE OKAY
NO
YES
208
AIRBAR #2 PRESSURE OKAY
NO
YES
210
UPDATE LAMP CONTROLS
203
TOGGLE RESET LEP

FIG. 12

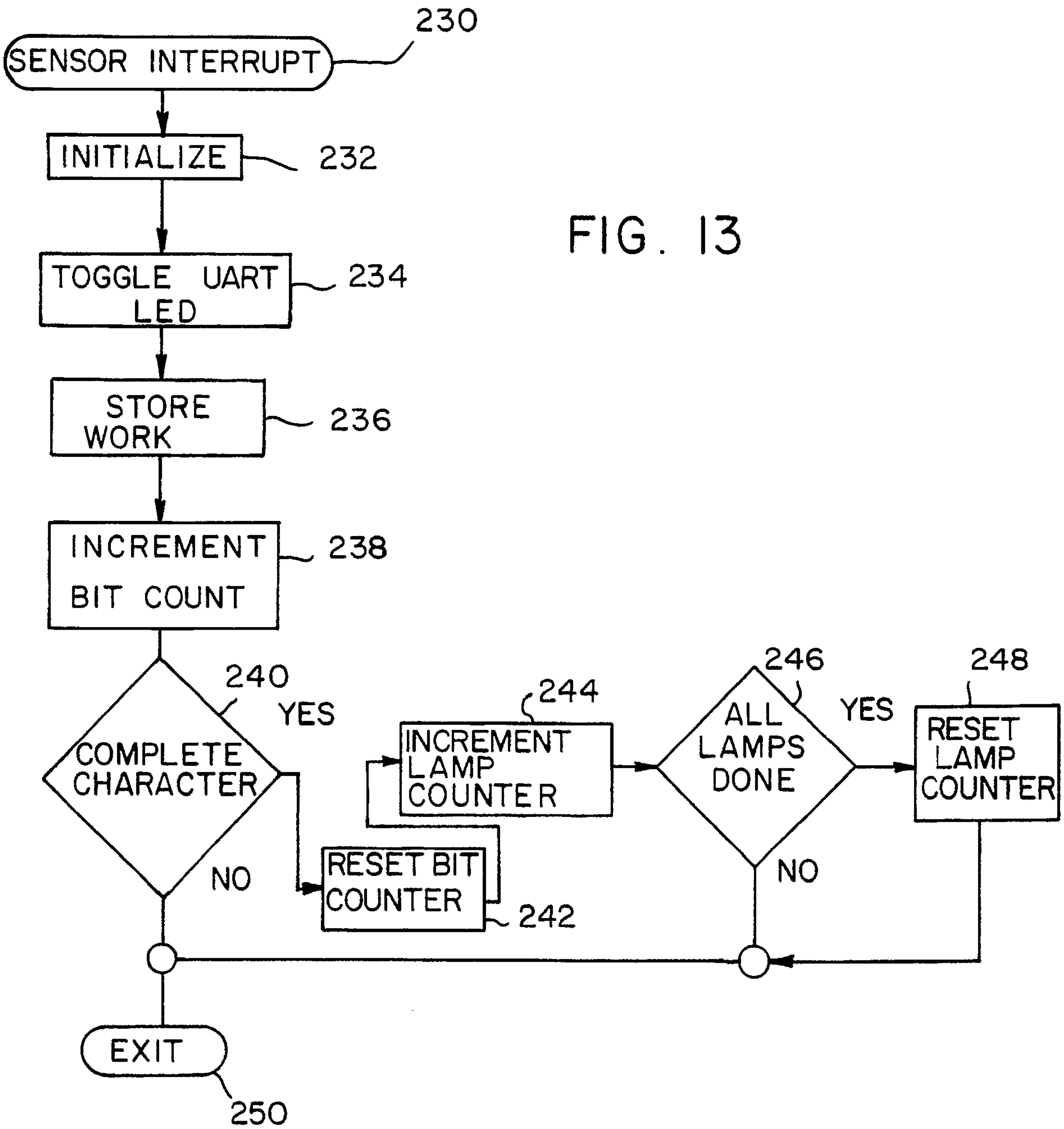
SENSOR INTERRUPT
230
INITIALIZE
232
TOGGLE UART LED
234
STORE WORK
236
INCREMENT BIT COUNT
238
COMPLETE CHARACTER
240
YES
NO
RESET BIT COUNTER
242
INCREMENT LAMP COUNTER
244
ALL LAMPS DONE
246
YES
NO
RESET LAMP COUNTER
248
EXIT
250

FIG. 13

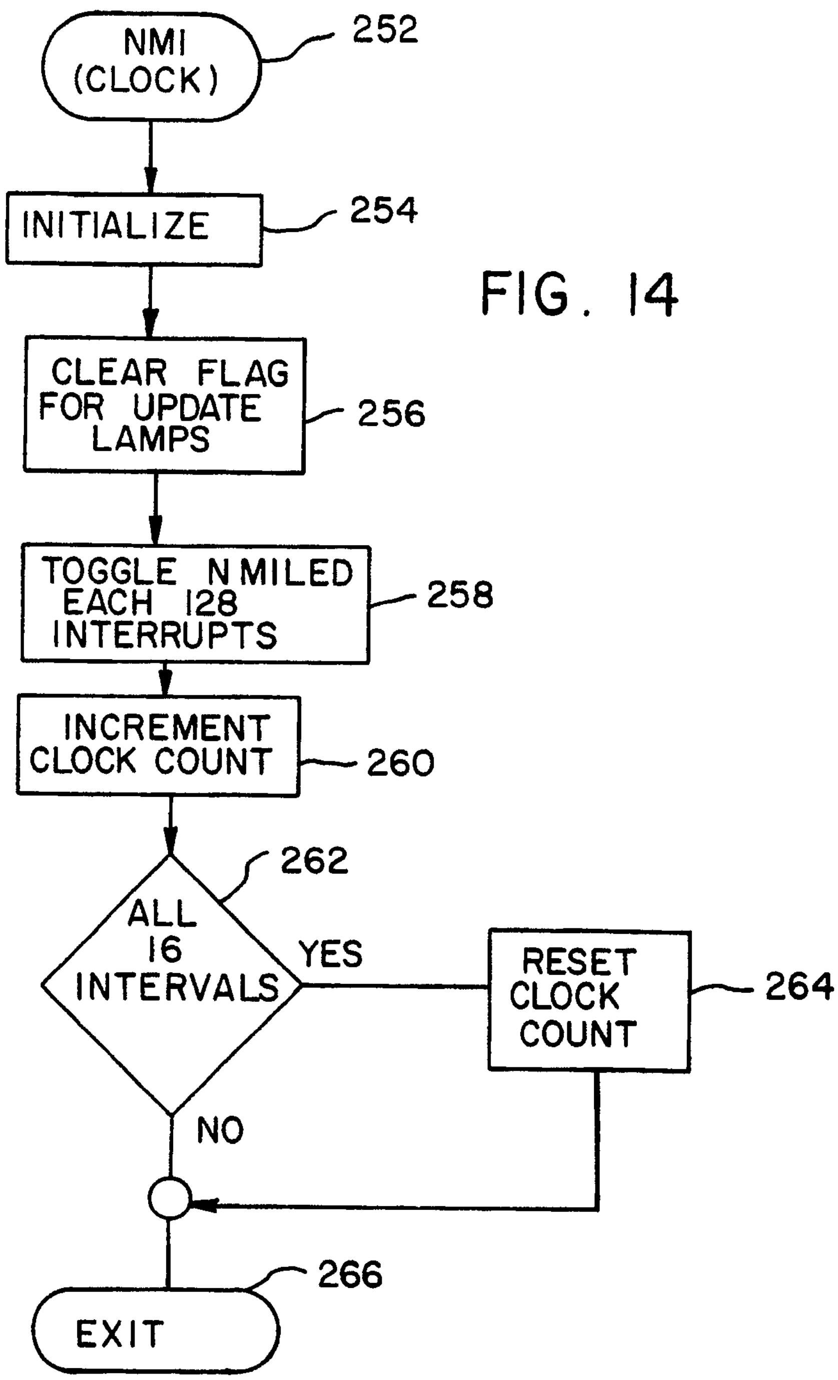

NMI (CLOCK)
252
INITIALIZE
254
CLEAR FLAG FOR UPDATE LAMPS
256
TOGGLE NMILED EACH 128 INTERRUPTS
258
INCREMENT CLOCK COUNT
260
ALL 16 INTERVALS
262
YES
NO
RESET CLOCK COUNT
264
EXIT
266


FIG. 14

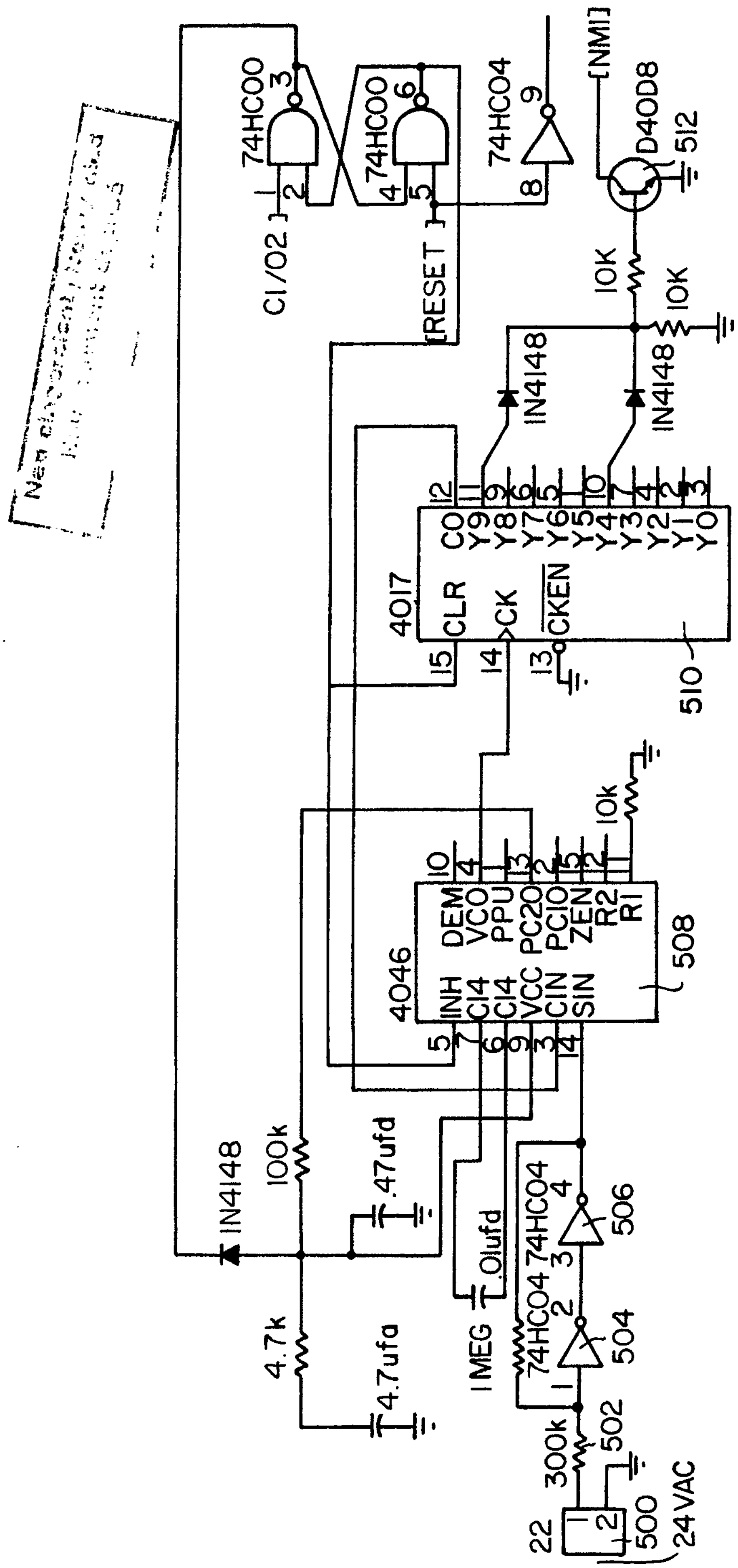
74HCOO
74HCOO
74HCO4
[NMI]
D40D8
512
C1/O2
RESET
10K
10K
IN4148
IN4148
4017
CLR
CK
CKEN
CO
Y9
Y8
Y7
Y6
Y5
Y4
Y3
Y2
Y1
Y0
510
4046
INH
C14
C14
VCC
CIN
SIN
DEM
VCO
PPU
PC2O
PC1O
ZEN
R2
R1
508
10k
IN4148
100k
.47ufd
.01ufd
4.7k
4.7ufa
1 MEG
74HCO4
74HCO4
504
506
300k
502
22
500
24VAC

FIG. 15

European Patent Office

# EUROPEAN SEARCH REPORT

Application Number

EP 90309831.7

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | US - A - 4 501 072 (JACOBI) * Abstract; claims 1-30; fig. 2,9,10 * -- | 1-10 | G 05 D 15/00 |
| A | DE - A1 - 3 334 381 (FLEISSNER) * Abstract; claims 1-17; fig. 1-3 * -- | 1-10 | |
| A | DE - A1 - 3 741 128 (VALMET OY.) * Abstract; claims 1-7; fig. 1 * -- | 1-10 | |
| D,A | US - A - 4 693 013 (PABST) * Abstract; claims 1-5; fig. 1,2 * -- | 1-10 | |
| A | WO - A1 - 89/05 883 (INFRARÖDTEKNIK) * Abstract; claims 1-10; fig. 1-7 * -- | 1-10 | TECHNICAL FIELDS SEARCHED (Int. Cl.5) |
| D,A | US - A - 4 015 340 (TRELEVEN) * Abstract; claims 1-16; fig. 1-15 * ---- | 1-10 | G 05 D 15/00<br>F 26 B 13/00 |

The present search report has been drawn up for all claims

| Place of search | Date of completion of the search | Examiner |
|---|---|---|
| VIENNA | 27-11-1990 | VAKIL |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document